(19) **Europäisches Patentamt / European Patent Office / Office européen des brevets**

(11) **EP 4 738 912 A1**

(12) # EUROPEAN PATENT APPLICATION
published in accordance with Art. 153(4) EPC

(43) Date of publication:
06.05.2026  Bulletin 2026/19

(21) Application number: 24850745.1

(22) Date of filing: 10.07.2024

(51) International Patent Classification (IPC):
*H04W 24/02* (2009.01)

(52) Cooperative Patent Classification (CPC):
G06Q 50/06; G06Q 10/0639; H04W 24/02;
H04W 52/02

(86) International application number:
PCT/CN2024/104763

(87) International publication number:
WO 2025/031094 (13.02.2025 Gazette 2025/07)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 10.08.2023  CN 202311015416

(71) Applicant: **Huawei Technologies Co., Ltd.**
**Shenzhen, Guangdong 518129 (CN)**

(72) Inventors:
• **ZHAO, Xian**
  **Shenzhen, Guangdong 518129 (CN)**
• **CAO, Longyu**
  **Shenzhen, Guangdong 518129 (CN)**

(74) Representative: **Isarpatent**
**Patent- und Rechtsanwälte Part G mbB**
**Friedrichstrasse 31**
**80801 München (DE)**

(54) **GREEN ENERGY MANAGEMENT METHOD, NETWORK ELEMENT, AND SYSTEM**

(57)    A green energy management method, a network element, and a system are provided, and are applied to the field of communication technologies. The method includes: A green energy management functional entity obtains a green energy decision factor, and delivers green energy management indication information based on the green energy decision factor. The green energy management indication information may be used to control green energy usage of a communication network element in a first time period. After receiving the green energy management indication information, a configuration management functional entity controls the green energy usage of the communication network element in the first time period. According to the method provided in embodiments of this application, the green energy usage of the communication network element is effectively managed, and a capability of a network management system to control energy usage of the communication network element is improved.

FIG. 3

EP 4 738 912 A1

## Description

This application claims priority to Chinese Patent Application No. 202311015416.6, filed with the China National Intellectual Property Administration on August 10, 2023 and entitled "GREEN ENERGY MANAGEMENT METHOD, NETWORK ELEMENT, AND SYSTEM", which is incorporated herein by reference in its entirety.

## TECHNICAL FIELD

This application relates to the field of communication technologies, and in particular, to a green energy management method, a network element, and a system.

## BACKGROUND

Dramatic changes in climate pose a major threat to human society. Therefore, many countries have elevated "carbon neutrality" to national strategies and proposed long-term goals for a carbon-free future. More robust policies and measures can be adopted in the future. For example, every effort is made to achieve peak carbon emission by 2030 for carbon dioxide emission and to achieve carbon neutrality by 2060.

It can be learned from prediction of operators on $5^{th}$-generation ($5^{th}$-generation, 5G) construction and planning that carbon emission of telecommunication networks will reach 406 million tons in 2025, and is increased by 74% in comparison with 2019. Large-scale 5G deployment faces a major energy consumption challenge for sustainable development. In terms of network construction and maintenance, energy saving and carbon reduction of devices, sites, and equipment rooms are inevitable problems in the information and communication industry.

Therefore, how to perform green energy management on a communication network element is an urgent problem to be resolved.

## SUMMARY

Embodiments of this application provide a green energy management method, a network element, and a system, to effectively manage green energy usage of a communication network element, and improve a capability of a network management system to control energy usage of the communication network element.

According to a first aspect, an embodiment of this application provides a green energy management method. The method is applied to a first network element. The first network element may be a green energy management functional unit or a green energy management functional entity. The method includes:
obtaining a green energy decision factor, where the green energy decision factor is a factor used to decide a green energy usage status of a communication network element; and sending green energy management indication information based on the green energy decision factor, where the green energy management indication information is used to control green energy usage of the communication network element in a first time period.

In this embodiment of this application, the first network element obtains the green energy decision factor, and may send the green energy management indication information based on the green energy decision factor, to manage green energy usage of the communication network element, and improve a capability (or referred to as control strength) of a network management system to control energy usage of the communication network element.

In a possible implementation, the green energy decision factor includes a measurement value of and a requirement on a green energy indicator of the communication network element.

In this embodiment of this application, the first network element sends the green energy management indication information by using the measurement value of the green energy indicator of the communication network element and the requirement on the green energy indicator. In this way, the green energy usage of the communication network element is managed, and a capability of the first network element to control energy usage (for example, the green energy usage) of the communication network element is improved. In addition, the green energy usage of the communication network element is adjusted as required, and the green energy usage is accurately optimized, and flexibility of green energy management is improved.

In a possible implementation, sending the green energy management indication information based on the green energy decision factor includes: when the measurement value does not satisfy the requirement, sending the green energy management indication information based on a difference between the measurement value and the requirement.

In a possible implementation, the green energy indicator includes at least one of the following: a green energy proportion, where the green energy proportion indicates a proportion of green energy consumption of the communication network element in overall energy consumption of the communication network element; green energy usage, where the green energy usage indicates green energy consumption of the communication network element in a second time period; a green energy supply, where the green energy supply indicates an amount of green energy provided for the communication network element in a second time period; carbon emission, where the carbon emission indicates carbon emission generated by the communication network element due to power consumption in a second time period; carbon intensity, where the carbon intensity indicates carbon emission generated by the communication network element for a unit data volume of the communication network element; or carbon efficiency, where the carbon efficiency indicates carbon emission generated by the communication network element for a unit service level, or a unit service level brought by unit carbon emission.

In a possible implementation, the green energy decision factor includes a mapping relationship between a unit price of non-green energy and a time period.

In this embodiment of this application, the first network element sends the green energy management indication information by using the mapping relationship between the unit price of the non-green energy and the time period. In this way, the green energy usage of the communication network element is managed, and a capability of the first network element to control energy usage (for example, the green energy usage) of the communication network element is improved. In addition, this is simple and efficient.

In a possible implementation, if the mapping relationship indicates that a unit price of the non-green energy in the first time period is higher than a unit price of the non-green energy in a third time period, the green energy management indication information indicates that the green energy usage in the first time period is greater than zero. Alternatively, if the mapping relationship indicates that a unit price of the non-green energy in the first time period is lower than or equal to a unit price of the non-green energy in a third time period, the green energy management indication information indicates that the green energy usage in the first time period is zero.

In a possible implementation, the green energy management indication information includes at least one of the following: an increase amount or a decrease amount of the green energy usage in the first time period; the green energy usage in the first time period; or indication information indicating to increase the green energy usage in the first time period, or indication information indicating to decrease the green energy usage in the first time period.

In this embodiment of this application, the green energy management indication information may be used to flexibly control green energy usage of a communication network, optimize the green energy usage of the communication network, and improve a capability to control energy usage of the communication network element.

In a possible implementation, the green energy management indication information further includes identification information of the communication network element.

In this embodiment of this application, the green energy management indication information includes the identification information of the communication network element, to clearly indicate a communication network element whose green energy usage is controlled by using the green energy management indication information.

In a possible implementation, obtaining the green energy decision factor of the communication network element includes: sending a first measurement request, where the first measurement request is used to request to measure the green energy indicator of the communication network element; and receiving a first measurement response of the first measurement request, where the first measurement response includes the measurement value of the green energy indicator.

In a possible implementation, the first measurement request includes identification information of the communication network element and first indicator indication information, and the first indicator indication information indicates the green energy indicator.

In a possible implementation, the first measurement request further includes time period indication information, the time period indication information indicates a second time period, and the measurement value of the green energy indicator is a measurement value of a green energy indicator in the second time period.

In this embodiment of this application, the first measurement request includes the time period indication information, to clearly indicate a measurement time period of the green energy indicator.

In a possible implementation, the method further includes: receiving feedback information of the green energy management indication information, where the feedback information indicates a control result of the green energy usage of the communication network element in the first time period.

In this embodiment of this application, the first network element receives the feedback information, to clearly learn of the control result of the green energy usage of the communication network element.

According to a second aspect, an embodiment of this application provides a green energy management method. The method is applied to a second network element. The method includes:

receiving green energy management indication information, where the green energy management indication information is used to control green energy usage of a communication network element in a first time period; and controlling the green energy usage of the communication network element based on the green energy management indication information.

In a possible implementation, the green energy management indication information includes at least one of the following: an increase amount or a decrease amount of the green energy usage in the first time period; the green energy usage in the first time period; or indication information indicating to increase the green energy usage in the first time period, or indication information indicating to decrease the green energy usage in the first time period.

In a possible implementation, the green energy management indication information further includes identification information of the communication network element.

In a possible implementation, controlling the green energy usage of the communication network element based on the green energy management indication information includes:

sending a control request, where the control request is used to request to control the green energy usage of the communication network element; and receiving a control response of the control request, where the control response indicates a control result of the green energy usage of the communication network element in the first time period.

In a possible implementation, the control request includes at least one of the following:

the increase amount or the decrease amount of the green energy usage in the first time period; the green energy usage in the first time period; or the indication information indicating to increase the green energy usage in the first time period, or the indication information indicating to decrease the green energy usage in the first time period.

In a possible implementation, the control request further includes location information of the communication network element, or identification information of a power supply system corresponding to the communication network element.

In a possible implementation, before sending the control request, the method further includes:

obtaining, based on the location information corresponding to the identification information of the communication network element, the identification information of the power supply system corresponding to the communication network element; and

storing a correspondence between the identification information of the communication network element and the identification information of the power supply system.

In a possible implementation, the method further includes:

sending feedback information based on the control response, where the feedback information indicates the control result of the green energy usage of the communication network element in the first time period.

According to a third aspect, an embodiment of this application provides a green energy management method. The method is applied to a third network element. The method includes:

receiving a first measurement request, where the first measurement request is used to request to measure a green energy indicator of a communication network element; and sending a first measurement response of the first measurement request, where the first measurement response includes a measurement value of the green energy indicator.

In a possible implementation, the first measurement request includes identification information of the communication network element and first indicator indication information, and the first indicator indication information indicates the green energy indicator.

In a possible implementation, the first measurement request further includes time period indication information, the time period indication information indicates a second time period, and the measurement value of the green energy indicator is a measurement value of a green energy indicator in the second time period.

In a possible implementation, after receiving the first measurement request, and before sending the first measurement response of the first measurement request, the method further includes:

sending a second measurement request, where the second measurement request includes second indicator indication information, the second measurement request further includes location information of the communication network element, or identification information of a power supply system corresponding to the communication network element, and the second indicator indication information indicates the green energy indicator; and receiving a second measurement response of the second measurement request, where the second measurement response includes the measurement value of the green energy indicator.

In a possible implementation, before sending the second measurement request, the method further includes: obtaining, based on the location information corresponding to the identification information of the communication network element, the identification information of the power supply system corresponding to the communication network element.

According to a fourth aspect, an embodiment of this application provides a green energy management method. The method is applied to a fourth network element. The method includes:

receiving a control request, where the control request is used to request to control green energy usage of a communication network element; and sending a control response of the control request, where the control response indicates a control result of green energy usage of the communication network element in a first time period.

In a possible implementation, the control request includes at least one of the following:

an increase amount or a decrease amount of the green energy usage in the first time period; the green energy usage in the first time period; or indication information indicating to increase the green energy usage in the first time period, or indication information indicating to decrease the green energy usage in the first time period.

In a possible implementation, the control request further includes location information of the communication network element, or identification information of a power supply system corresponding to the communication network element.

In a possible implementation, before receiving the control request, the method further includes:
receiving a second measurement request, where the second measurement request is used to request to measure a green energy indicator of the communication network element; and sending a second measurement response of the second measurement request, where the second measurement response includes a measurement value of the green energy indicator.

In a possible implementation, the second measurement request includes second indicator indication information, the measurement request further includes the location information of the communication network element, or the identification information of the power supply system corresponding to the communication network element, and the second indicator indication information indicates the green energy indicator.

In a possible implementation, the second measurement request further includes time period indication information, the time period indication information indicates a second time period, and the measurement value of the green energy indicator is a measurement value of a green energy indicator in the second time period.

According to a fifth aspect, an embodiment of this application provides a green energy management method. The method is applied to a first network element. The method includes:
sending a first measurement request, where the first measurement request is used to request to measure a green energy indicator of a communication network element; and receiving a first measurement response of the first measurement request, where the first measurement response includes a measurement value of the green energy indicator.

In this embodiment of this application, the first network element sends the first measurement request and receives the first measurement response, to clearly learn of the measurement value of the green energy indicator of the communication network element, so that the first network element can adjust green energy usage of the communication network element based on the green energy indicator of the communication network element.

According to a sixth aspect, an embodiment of this application provides a green energy management method. The method is applied to a third network element. The method includes:
receiving a first measurement request, where the first measurement request is used to request to measure a green energy indicator of a communication network element; and sending a first measurement response of the first measurement request, where the first measurement response includes a measurement value of the green energy indicator.

In a possible implementation, the method further includes:
sending a second measurement request based on the first measurement request; and receiving a second measurement response of the second measurement request.

According to a seventh aspect, an embodiment of this application provides a network element, configured to perform the method in any one of the first aspect, the second aspect, the third aspect, the fourth aspect, the fifth aspect, the sixth aspect, or the possible implementations. The network element includes a unit that performs the method in any one of the first aspect, the second aspect, the third aspect, the fourth aspect, the fifth aspect, the sixth aspect, or the possible implementations.

According to an eighth aspect, an embodiment of this application provides a network element. The network element includes a processor, configured to perform the method in any one of the first aspect, the second aspect, the third aspect, the fourth aspect, the fifth aspect, the sixth aspect, or the possible implementations. The processor is configured to execute a program stored in a memory. When the program is executed, the method in any one of the foregoing aspects or the possible implementations is performed.

In a possible implementation, the memory is located outside the network element.

In a possible implementation, the memory is located in the network element.

In this embodiment of this application, the processor and the memory may alternatively be integrated into one device. In other words, the processor and the memory may alternatively be integrated together.

In a possible implementation, the network element further includes a transceiver. The transceiver is configured to receive information or send information.

According to a ninth aspect, an embodiment of this application provides a network element. The network element includes a logic circuit and an interface, and the logic circuit is coupled to the interface. The interface is configured to input and/or output information, and the logic circuit is configured to perform the method in any one of the first aspect to the sixth aspect or the possible implementations.

According to a tenth aspect, an embodiment of this application provides a computer-readable storage medium. The computer-readable storage medium is configured to store a computer program. When the computer program is run on a computer, the method in any one of the first aspect, the second aspect, the third aspect, the fourth aspect, the fifth aspect, the sixth aspect, or the possible implementations is performed.

According to an eleventh aspect, an embodiment of this application provides a computer program product. The computer program product includes a computer program or computer code. When the computer program product runs on a computer, the method in any one of the first aspect, the second aspect, the third aspect, the fourth aspect, the fifth aspect, the sixth aspect, or the possible implementations is performed.

According to a twelfth aspect, an embodiment of this application provides a computer program. When the computer program is run on a computer, the method in any one of the first aspect, the second aspect, the third aspect, the fourth aspect, the fifth aspect, the sixth aspect, or the possible implementations is performed.

According to a thirteenth aspect, an embodiment of this application provides a green energy management system. The green energy management system includes a first network element and a second network element. The first network element is configured to perform the method in any one of the first aspect or the possible implementations of the first aspect, and the second network element is configured to perform the method in any one of the second aspect or the possible implementations of the second aspect.

In a possible implementation, the green energy management system further includes a third network element, and the third network element is configured to perform the method in any one of the third aspect or the possible implementations of the third aspect.

In a possible implementation, the green energy management system further includes a fourth network element, and the fourth network element is configured to perform the method in any one of the fourth aspect or the possible implementations of the fourth aspect.

## BRIEF DESCRIPTION OF DRAWINGS

FIG. 1 is a networking diagram of energy usage according to an embodiment of this application;

FIG. 2 is a diagram of an architecture of a green energy management system according to an embodiment of this application;

FIG. 3 is a schematic flowchart of a green energy management method according to an embodiment of this application;

FIG. 4a is a diagram of a method for obtaining a green energy decision factor according to an embodiment of this application;

FIG. 4b is a diagram of another method for obtaining a green energy decision factor according to an embodiment of this application;

FIG. 5 is a diagram of a method for controlling green energy usage according to an embodiment of this application;

FIG. 6A and FIG. 6B are a schematic flowchart of a green energy management method according to an embodiment of this application;

FIG. 7A to FIG. 7C are a schematic flowchart of another green energy management method according to an embodiment of this application;

FIG. 8A and FIG. 8B are a schematic flowchart of still another green energy management method according to an embodiment of this application;

FIG. 9 is a diagram of a structure of a network element according to an embodiment of this application;

FIG. 10 is a diagram of a structure of another network element according to an embodiment of this application; and

FIG. 11 is a diagram of a structure of still another network element according to an embodiment of this application.

## DESCRIPTION OF EMBODIMENTS

For ease of understanding technical solutions of this application, the following further describes this application with reference to the accompanying drawings.

Terms "first", "second", and the like in the specification, claims, and accompanying drawings of this application are merely used to distinguish between different objects, and are not used to describe a specific order. In addition, terms "include", "have", and any other variant thereof are intended to cover non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

An "embodiment" mentioned in the specification means that a specific feature, structure, or characteristic described in combination with the embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may represent the following three cases: Only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof means any combination of these items. For example, at least one of a, b, or c may represent: a, b, c, "a and b", "a and c", "b and c", or "a, b, and c".

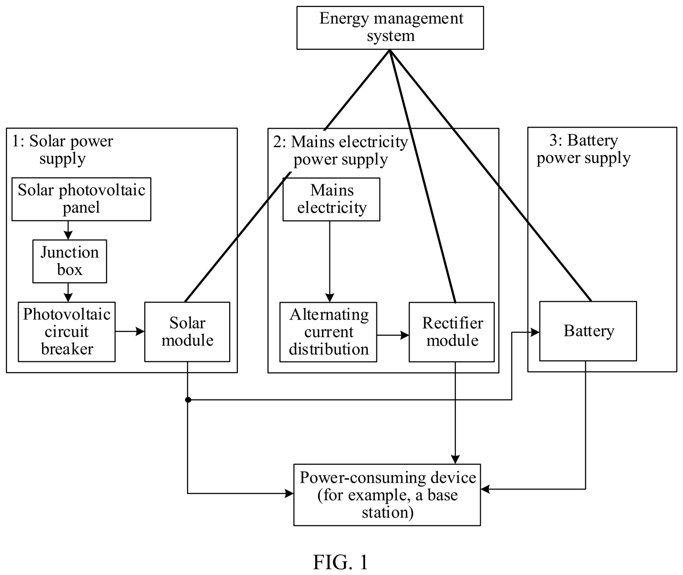

FIG. 1 is a networking diagram of energy usage according to an embodiment of this application. In FIG. 1, a thick arrow represents a transmission direction of a network signal (for example, the network signal may be sent by an energy management system, or the energy management system may receive the network signal), and a thin arrow represents a flow direction of energy (for example, a direct current or an alternating current). The energy management system may manage a power supply module. As shown in FIG. 1, the energy management system may manage a solar module, a rectifier module, and a battery. The solar module, the rectifier module, and the battery shown in FIG. 1 each may be referred to as a power supply system or an energy system. For ease of description, the following uses the power supply system as an example to describe managed objects of the energy management system.

The following describes in detail three power supply modes shown in FIG. 1.

1. Solar power supply

A solar photovoltaic panel may convert solar energy into electric energy. A junction box converges electric energy from photovoltaics connected in series and outputs the electric energy together. A photovoltaic circuit breaker is used to connect, disconnect, and protect a solar photovoltaic power cable. The solar module may convert an input voltage of the solar energy into a specified voltage. A current obtained through voltage conversion may be used by a power-consuming device or used for battery storage. The power-consuming device shown in embodiments of this application may alternatively be a communication network element shown below.

2. Mains electricity (mains electricity) power supply

Mains electricity is a general alternating current supplied to households or enterprises. Alternating current distribution is used to connect a power supply, a transformer, a converter, another load, and the like, to provide alternating current power supply distribution, protection, and monitoring for the power-consuming device. The rectifier module converts the alternating current into a direct current with a specified voltage. The converted current may be used by the power-consuming device.

An energy source of the mains electricity may be non-green energy. Alternatively, an energy source of the mains electricity may be green energy, for example, solar power generation or wind power generation. For example, carbon emission may be equal to energy consumption multiplied by a carbon emission factor. Therefore, when carbon emission generated by consuming the mains electricity is calculated, a specific carbon emission factor may be calculated based on a proportion of green energy used in mains electricity power generation and a proportion of a specific power generation material (for example, coal fired power generation or oil fired power generation) of the used non-green energy.

3. Battery power supply

A battery, for example, a storage battery, may receive charging of an output current from the solar module (as shown in FIG. 1), receive charging of an output current from the rectifier module (not shown in FIG. 1), and may further supply power to the power-consuming device.

The energy management system may monitor various power supply systems. For example, the energy management system may complete basic management and maintenance, for example, monitoring a power generation status, power generation power, and a power generation capacity. For another example, the energy management system may further monitor a related alarm, for example, an alarm indicating that the power generation power is extremely low or the power generation capacity is extremely low. For another example, the energy management system may further report a state, for example, report a normal working state, or report an abnormal working state. For another example, the energy management system may further collect a green energy indicator, manage the green energy indicator, and the like. For example, the energy management system may collect statistics on and control the power generation capacity or a power supply capacity. For another example, the energy management system may further implement overall scheduling of a photovoltaic deployment function through overall monitoring of power supply devices such as the rectifier module (power supply unit, PSU) and the battery.

For example, Table 1 shows power supply solutions in different lighting scenarios and mains electricity statuses.

Table 1

| Lighting condition | Mains electricity status | Power supply solution |
|---|---|---|
| Sufficient lighting | Normal mains electricity | The solar energy supplies power. The solar module is preferred to supply power to the power-consuming device and charge the battery. |
| | Mains electricity outage | The solar energy supplies power, the battery provides backup power, and power backup time of the battery is prolonged. |
| Partial lighting | Normal mains electricity | The solar energy and the mains electricity supply power. The solar module (or referred to as a solar supply unit (solar supply unit, SSU)) and the PSU work together, to make full use of the solar energy. For example, a voltage of the SSU may be set to be greater than a voltage of the PSU.<br>The PSU is configured in a manner of normal load+redundancy, to ensure that the SSU can normally supply power regardless of a proportion of solar energy input into the SSU. |
| | Mains electricity outage | The battery supplies power, to ensure system reliability and stability. |
| No lighting | Normal mains electricity | The mains electricity supplies power, and the PSU compensates for insufficient solar power supply power, to ensure load power supply and battery charging. |
| | Mains electricity outage | The battery supplies power, to ensure system reliability and stability. |

It can be learned from Table 1 that the energy management system can adjust a green energy usage status of the power-consuming device only based on the mains electricity status and the lighting condition. In addition, in a currently existing solution, only the energy management system can adjust the green energy usage status of the power-consuming device.

In view of this, embodiments of this application provide a green energy management method, a network element, and a system, to effectively manage green energy of a communication network element, and improve a capability of a network management system to control energy usage of the communication network element. Further, the method provided in embodiments of this application may optimize green energy usage of the communication network element, accurately control the green energy usage of the communication network element, and control energy types (for example, green energy and non-green energy) of the communication network element.

The following describes in detail an architecture of a green energy management system provided in embodiments of this application.

The green energy management system shown in embodiments of this application may include a first network element and a second network element. For example, the green energy management system may further include a third network element and a fourth network element. For example, the first network element may be referred to as a green energy management functional entity or a green energy management functional unit, the second network element may be referred to as a configuration management functional entity or a configuration management functional unit, the third network element may be referred to as a performance management functional entity or a performance management functional unit, and the fourth network element may be referred to as an energy management system. The first network element, the second network element, the third network element, and the fourth network element may alternatively have other names. This is not limited in embodiments of this application. For ease of description, the following uses the green energy management functional entity, the configuration management functional entity, the performance management functional entity, and the energy management system as an example to describe the method and the system provided in embodiments of this application.

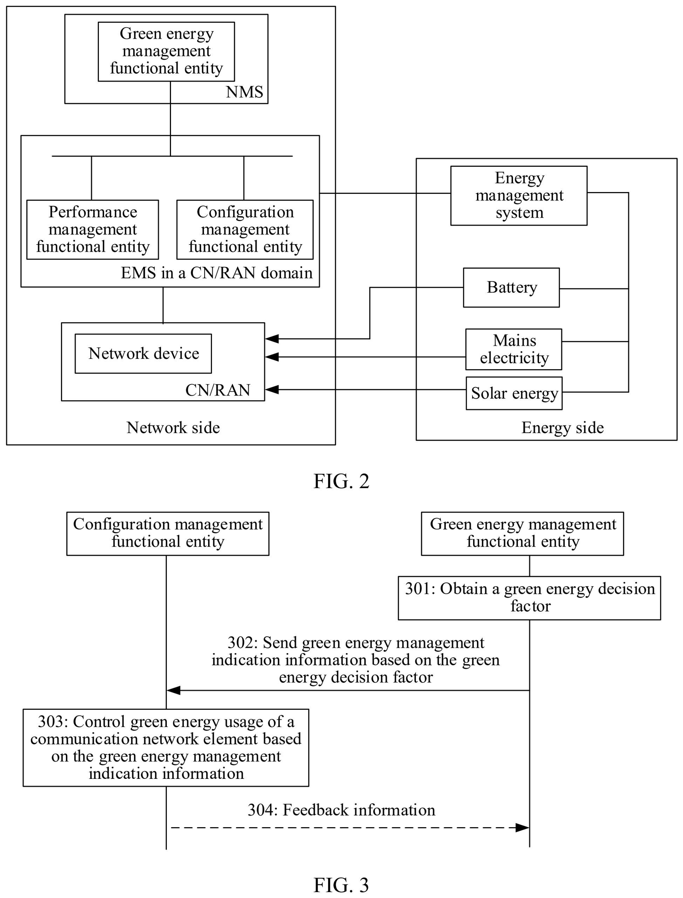

FIG. 2 is a diagram of an architecture of a green energy management system according to an embodiment of this application. As shown in FIG. 2, the system architecture includes a network management system (network management system, NMS), a functional entity of the network management system, an energy management system, and functional entities of the energy management system. FIG. 2 shows an example of the functional entity included in the NMS and

8

functional entities included in an element management system (element management system, EMS). Other functional entities included in the NMS and the EMS are not limited in embodiments of this application. For example, the EMS may further include an alarm management functional entity (or referred to as an alarm management functional unit), and the alarm management functional entity may be configured to send alarm information. For example, when the alarm management functional entity detects that a value of a green energy indicator (for example, one or more green energy indicators) is less than a corresponding threshold, or detects that a change trend of a green energy indicator is abnormal or a change rate is abnormal, the alarm management functional entity may send alarm information. A green energy management functional entity receives the alarm information, and sends green energy management indication information based on the alarm information.

The following describes, by using examples, various functional entities shown in FIG. 2.

Green energy management functional entity: is deployed in a cross-domain management system (cross-domain management system) (or referred to as the NMS as shown in FIG. 2), and is responsible for cross-domain green energy management, for example, cross-domain carbon efficiency management. For example, the green energy management functional entity may collect single-domain network element carbon efficiency (base station carbon efficiency/core network carbon efficiency) by invoking a single-domain performance management functional entity, and achieve cross-domain carbon efficiency (including end-to-end slice carbon efficiency) by invoking performance management services and/or configuration management services provided by a plurality of EMSs. For example, the NMS may invoke a performance management service provided by a performance management functional entity in an EMS in a CN domain, or may invoke a performance management service provided by a performance management functional entity in an EMS in a RAN domain. Similarly, the NMS may invoke a configuration management service provided by a configuration management functional entity in the EMS in the CN domain, or may invoke a configuration management service provided by a configuration management functional entity in the EMS in the RAN domain. The end-to-end slice carbon efficiency achieved by the green energy management functional entity is described by using an example. For example, a slice includes a base station 1 in the RAN domain and a UPF 1 and an AMF 1 in the CN domain. To collect statistics on carbon emission of the slice, the NMS may send a request to the invoked performance management functional entity in the EMS in the RAN domain, for example, request to collect carbon emission of the base station 1, and send a request to the invoked performance management functional entity in the EMS in the CN domain, for example, request to collect carbon emission of the UPF 1 and the AMF 1. The NMS may obtain the carbon emission of the slice based on the carbon emission of the network elements. For descriptions of achieving carbon efficiency of a communication network element by the green energy management functional entity, refer to the following method.

Configuration management functional entity: is responsible for configuration management of a core network element or an access network element (for example, a base station).

Performance management functional entity: is responsible for measurement of performance of the core network element or the access network element, for example, a latency, a throughput, and a green energy indicator. For example, the EMS in the CN domain may be responsible for configuration management of the core network element and measurement of performance (for example, a green energy indicator) of the core network element. The EMS in the RAN domain may be responsible for configuration management of the access network element and measurement of performance (for example, a green energy indicator) of the access network element.

Radio access network (radio access network, RAN): may include an access network element, for example, a next generation NodeB (next generation node base station, gNB). A specific type or a deployment manner of the access network element is not limited in embodiments of this application.

Core network (core network, CN): may include a core network element, for example, an access and mobility management function (access and mobility management function, AMF), a session management function (session management function, SMF), or a user plane function (user plane function, UPF). A functional entity in the core network element is not limited in embodiments of this application.

Energy management system: focuses on unified management of energy, environment, and security components, monitors performance and alarm information of a related device to help maintenance personnel remotely manage energy, collects statistics on and analyzes energy consumption, and provides data support suggestions for energy saving optimization. Managed objects include power supply systems, for example, power supply components such as a solar panel, mains electricity, a UPS, a storage battery, a diesel generator, a fuel tank, and an alternating current/direct current (alternating current/direct current, AC/DC). A battery, mains electricity, and solar energy shown in FIG. 2 are merely examples. For example, the energy management system may further manage wind energy. Details are not listed one by one herein. For related descriptions of the energy management system, refer to FIG. 1. Details are not described herein again. The energy management system may also be referred to as a site energy management system or the like. A specific name of the energy management system is not limited in embodiments of this application.

The battery, the mains electricity, the solar energy, and the like managed by the energy management system each may be referred to as a power supply system, and the power supply system may be configured to supply power to a network device. In an example, as shown in FIG. 2, a plurality of power supply systems may control one network device. In another example, one power supply system may control one network device. A network element (for example, referred to as a managed object) of the network management system may be a network device, and a managed object of the energy management system may be solar energy, mains electricity, a battery (for example, a storage battery), or the like that supplies power to the network device. Although the network management system and the energy management system have different identifiers for the managed objects, the managed objects may be associated in terms of physical locations. For example, a solar panel may be deployed with a base station. In an example, the managed objects of the network management system and the energy management system may be associated based on identification information and location information of the communication network element. In another example, the managed objects of the network management system and the energy management system may be associated based on a relationship between identification information of the communication network element and identification information of the power supply system.

The following describes in detail terms in embodiments of this application.

1. Carbon footprint

Carbon footprint (carbon footprint) (or referred to as a CO2 footprint): is a set of greenhouse gas emission caused by business institutions, activities, products, or individuals through transportation, food production and consumption, and various production processes.

2. Green energy

Green energy (referred to as green energy for short): may also be referred to as clean energy, new energy, renewable energy, or the like. The green energy may be energy that does not damage or harm environments, or does not emit pollutants. Alternatively, the green energy may be energy with low damage, low environmental harm, or low pollutant emission. The green energy may be solar energy, wind energy, or the like.

3. Green energy decision factor

Green energy decision factor: is a factor used to decide a green energy usage status of a communication network element. Alternatively, the green energy decision factor is a factor that affects a green energy usage status of a communication network element. Alternatively, the green energy decision factor is a factor used to decide green energy usage of a communication network element. For example, the green energy decision factor may affect the green energy usage of the communication network element. For another example, the green energy decision factor may affect a first time period. The green energy decision factor may also be referred to as a green energy influencing factor, a green energy strategic factor, or the like.

4. Green energy indicator

Green energy indicator: is a collective term of indicators used to measure related performance of green energy usage or carbon emission generated by the communication network element due to energy consumption.

For example, the green energy indicator may include at least one of the following:

Green energy proportion: indicates a proportion of green energy consumption of the communication network element in overall energy consumption of the communication network element. The green energy proportion may also be referred to as a green energy usage proportion.

Green energy usage: indicates green energy consumption of the communication network element in a time period.

Green energy supply: indicates an amount of green energy provided for the communication network element in a time period. For example, statistics are collected/estimation is performed on a green energy supply of the communication network element in a time period. For example, the green energy supply may be determined based on a lighting condition in the time period.

Carbon emission: indicates carbon emission generated by the communication network element due to power consumption (for example, non-green energy or green energy) in a time period.

Carbon intensity: indicates carbon emission generated by the communication network element for a unit data volume, or a carbon dioxide equivalent emitted by a unit activity. For example, the carbon intensity may also be defined as a ratio of greenhouse gas (greenhouse gas, GHG) GHG emission generated due to power consumption of the communication network element in a network to a data volume processed by the network.

Carbon efficiency: may also be referred to as carbon emission efficiency, or the like, and indicates carbon emission generated by the communication network element for a unit service level, or a unit service level brought by unit carbon emission.

For example, the green energy usage may be less than or equal to the green energy supply. The unit service level may include any one or more of the following: unit data volume, unit coverage, and QoS. The time period shown above includes a second time period and the like shown below.

The carbon efficiency in embodiments of this application is different from a conventional energy efficiency definition (an effective output provided by unit energy consumption). For example, an appropriate multi-dimensional indicator is selected based on network carbon emission and a difference between service focuses in different scenarios, to perform comprehensive evaluation, so as to obtain the carbon efficiency. This may lead a wireless network to continuously develop toward a direction of providing more service volumes and better service experience with fewer carbon footprints. For example, the carbon efficiency may satisfy Formula (1):

$$\text{carbon efficiency} = \text{service level} / \text{carbon emission} \quad (1)$$

A numerator is the service level, and is used to describe communication network service utility. Due to an increase of emerging service types in a next-generation wireless network, the service level may be a parameter related to a total data transmission amount, user experience, and a scenario service type, and $r_i$ (scenario factor) is determined based on service types and service requirements in different scenarios. For example, Service=r_1 Data Volume+r_2 QoS+r_3 Coverage+.... A denominator is the carbon emission (which may also be referred to as a carbon footprint), that is, carbon emission generated by a communication device due to power consumption.

For example, if Q is the carbon footprint, the carbon efficiency (carbon efficiency, CE) may satisfy Formula (2):

$$\eta\_CE = (\lambda^T \times \mu)/Q \quad (2)$$

$\eta\_CE$ represents the carbon efficiency. $\lambda^T$ represents transposition of the vector $\lambda$. $\lambda=\{\lambda_1, \lambda_2, ..., \lambda_k\}$ represents weight vectors of K different application scenarios (for example, ultra-high rate, ultra-large-scale access, high mobility and low latency, and ultra-low power consumption communication), and a specific value of $\lambda_k$ is determined based on a proportion of a $K^{th}$ type of data volume (for example, a proportion of a data volume in a $K^{th}$ application scenario in a total data volume) and/or importance of the $K^{th}$ application scenario. K may be an integer greater than or equal to 1.

The vector $\mu=\{\mu_1, \mu_2, ..., \mu_k\}$ represents utility of the K application scenarios. The utility may be used to reflect a communication network effect. For example, the utility may be determined based on a data volume requirement and/or a service capability of a communication system. For example, an intuitive representative indicator of the utility may be a throughput or a quantity of access users. For example, a higher throughput indicates greater utility. For another example, the utility may alternatively be determined based on M different performance indicators shown below. For example, $\gamma=\{\gamma_1, \gamma_2, ..., \gamma_M\}$ represents a vector of a communication network service capability, and includes M different performance indicators. For example, $\gamma_1$ represents a throughput, $\gamma_2$ represents a latency, and $\gamma_3$ represents a maximum quantity of users. Details are not listed one by one herein. In this case, utility of the $k^{th}$ type of data volume $\mu_k$ depends on a quality of service (quality of service, QoS) requirement of the $k^{th}$ type of data volume and/or $\gamma$.

For example, there may be a linear relationship between $\mu_k$ and $\gamma$. For example, for some M-dimensional vectors $\beta_k$, $\mu_k=\beta_k^T \times \gamma$. An M*K-dimensional utility matrix B={$\beta_1, \beta_2, ..., \beta_k$} may be defined, and $\mu=B\gamma$ may be obtained by using the matrix. Therefore, the carbon efficiency may be obtained by defining a weight vector w=B$\lambda$, as shown in Formula (3):

$$\eta\_CE = (w^T \times \gamma)/Q \quad (3)$$

Formula (2) and Formula (3) use different mathematical expressions to represent the carbon efficiency. Formula (2) and Formula (3) may be equivalent. For example, a numerator in Formula (2) may be considered as a linear weighted sum of weights multiplied by utility in different application scenarios. Formula (3) specifically provides a utility calculation manner. For example, utility of one scenario is equal to a weighted sum of weights of a plurality of performance indicators multiplied by values of the performance indicators, that is, $\mu=B\gamma$.

Formula (1) to Formula (3) are shown by using an example in which the carbon efficiency indicates a unit service level brought by unit carbon emission of the communication network element. For example, the carbon efficiency may also satisfy any one of Formula (4) to Formula (6):

$$\text{carbon efficiency} = \text{carbon emission} / \text{service level} \quad (4)$$

$$\eta\_CE = Q/(\lambda^T \times \mu) \quad (5)$$

$$\eta\_CE = Q/(w^T \times \gamma) \ (6)$$

For specific descriptions of Formula (4) to Formula (6), refer to Formula (1) to Formula (3). Details are not described herein.

Based on the foregoing descriptions of the carbon intensity and the carbon efficiency, for the two indicators: the carbon intensity and the carbon efficiency, because the energy management system cannot learn of a data volume condition or a service level of a network, after the performance management functional entity obtains carbon emission or a carbon dioxide equivalent collected by the energy management system, the performance management functional entity further needs to perform secondary processing, for example, calculate measurement values of the two indicators based on definitions of the indicators.

The following describes in detail the green energy management method provided in embodiments of this application. A step in a dashed-line arrow or a dashed-line box below indicates that the step is optional. In specific implementation, the step may be performed or may not be performed. The step in the dashed-line arrow or the dashed-line box is not limited in embodiments of this application.

FIG. 3 is a schematic flowchart of a green energy management method according to an embodiment of this application. For related descriptions of a green energy management functional entity and a configuration management functional entity in the green energy management method, refer to FIG. 2. Details are not described herein again. As shown in FIG. 3, the method includes the following steps.

301: The green energy management functional entity obtains a green energy decision factor.

For a definition of the green energy decision factor, refer to the descriptions of the foregoing term. Details are not described herein again.

For the green energy decision factor, this embodiment of this application provides the following implementations:

Implementation 1

In a possible implementation, the green energy decision factor includes a measurement value of and a requirement on a green energy indicator of a communication network element.

The requirement on the green energy indicator may include a required value of the green energy indicator or a required range of the green energy indicator. For example, a required value of a green energy proportion may be 60%, a required value of green energy usage may be 2 kilowatt-hours, a required value of a green energy supply may be 5 kilowatt-hours, a required value of carbon emission may be 3 kg of CO2eq (CO2eq represents a carbon dioxide equivalent), and a required value of carbon intensity may be 3 g of CO2eq/bit. The required value shown herein is merely an example, and should not be understood as a limitation on embodiments of this application. For example, a required range of the green energy proportion may be 60% to 100%. Examples of the required range are not listed one by one herein.

For example, the foregoing requirement may be set by the green energy management functional entity, or may be determined by the green energy management functional entity by receiving an external requirement, for example, a service level agreement (service level agreement, SLA). For example, the external requirement may be understood as that when a customer subscribes to a slice from an operator, the customer may clearly require that a green energy proportion of the slice be at least 60%.

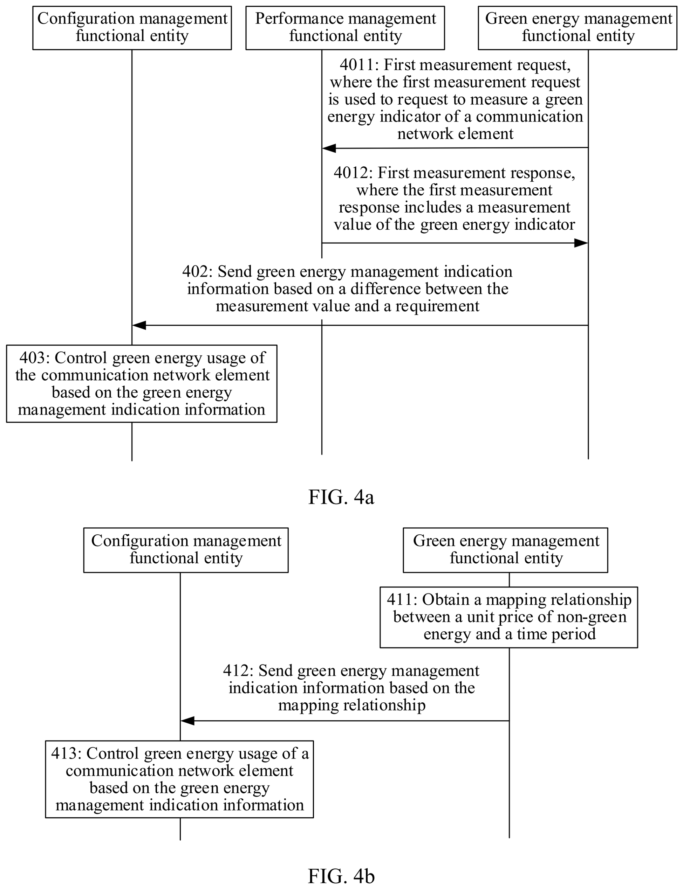

FIG. 4a is a diagram of a method for obtaining a green energy decision factor according to an embodiment of this application. As shown in FIG. 4a, that the green energy management functional entity obtains the green energy decision factor may include the following steps.

4011: The green energy management functional entity sends a first measurement request, where the first measurement request is used to request to measure a green energy indicator of a communication network element. Correspondingly, a performance management functional entity receives the first measurement request.

The first measurement request may be used to request to monitor the green energy indicator of the communication network element. The first measurement request may include at least one of the following: identification information of the communication network element, first indicator indication information, and time period indication information. The first indicator indication information may indicate the green energy indicator. The time period indication information may indicate a second time period.

In an example, the first measurement request may include the identification information of the communication network element. The identification information of the communication network element may indicate a measurement object, for example, identify a base station or a core network element. The first measurement request may include identification information of one communication network element, or include identification information of a plurality of communication network elements. The identification information of the communication network element may be identification information generated when a network management system creates a managed object, identification information generated during networking, or the like. The identification information of the communication network element is not limited in embodiments of this application. In this example, for example, the green energy indicator may be defined by a standard. For example, the standard may define the green energy indicator as carbon efficiency or carbon intensity. For another example, the green energy indicator is separately indicated by the green energy management functional entity by using other information. By default, a measurement time period may be considered as a period of time after the performance management functional entity receives the first measurement request, or the like.

In another example, the first measurement request may include the identification information of the communication network element and the first indicator indication information. For example, the first indicator indication information may be an index of the green energy indicator. For example, each indicator in a green energy proportion, green energy usage, a green energy supply, carbon emission, carbon intensity, and carbon efficiency may correspond to one index, so that a corresponding indicator is indicated by an index. For another example, the first indicator indication information may be a bitmap of the green energy indicator. For example, the first indicator indication information may be a bitmap with six bits, and each bit corresponds to one indicator. If a value of the bit is 1, it indicates to measure the indicator corresponding to the bit; or if a value of the bit is 0, it indicates not to measure the indicator corresponding to the bit. For another example, the first indicator indication information may indicate a name of the green energy indicator (for example, each green energy indicator corresponds to one character string), and a measurement or statistical indicator name related to green energy usage is indicated by using the name of the green energy indicator. The first indicator indication information may indicate one indicator, two indicators, three indicators, or the like. A quantity of indicators is not limited in embodiments of this application. For related descriptions of the measurement time period, refer to the foregoing example.

In still another example, the first measurement request may include the identification information of the communication network element, the first indicator indication information, and the time period indication information. A measurement value of the green energy indicator is a measurement value of a green energy indicator in the second time period. The first measurement request includes the time period indication information, to clearly indicate a measurement time period, so as to flexibly set the measurement time period, and improve flexibility of measuring the green energy indicator. For the identification information of the communication network element and the first indicator indication information, refer to the descriptions in the foregoing example. Details are not described herein again.

For example, the time period indication information may indicate start time and end time of the second time period. For another example, the time period indication information may be a bitmap, and each bit may correspond to one time period. If a value of the bit is 1, it indicates that the second time period includes the time period corresponding to the bit. If a value of the bit is 0, it indicates that the second time period does not include the time period corresponding to the bit. For example, a $1^{st}$ bit in the bitmap may correspond to 0 a.m. to 1 a.m., a $2^{nd}$ bit in the bitmap may correspond to 1 a.m. to 2 a.m., and so on. The bitmap may occupy 24 bits. The time period indication information shown herein is merely an example. In specific implementation, the second time period may alternatively be indicated in another manner.

In specific implementation, the first measurement request may alternatively not include the identification information of the communication network element, for example, a communication network element on which green energy management may be performed by default. For example, the first measurement request may include the first indicator indication information and/or the time period indication information. For ease of description, in the following specific examples, an example in which the first measurement request includes the identification information of the communication network element, the first indicator indication information, and the time period indication information is used.

4012: The performance management functional entity sends a first measurement response of the first measurement request, where the first measurement response includes the measurement value of the green energy indicator. Correspondingly, the green energy management functional entity receives the first measurement response.

The first measurement response may further include the identification information of the communication network element. For specific descriptions of the first measurement response, refer to the related descriptions of the first measurement request. Details are not described herein.

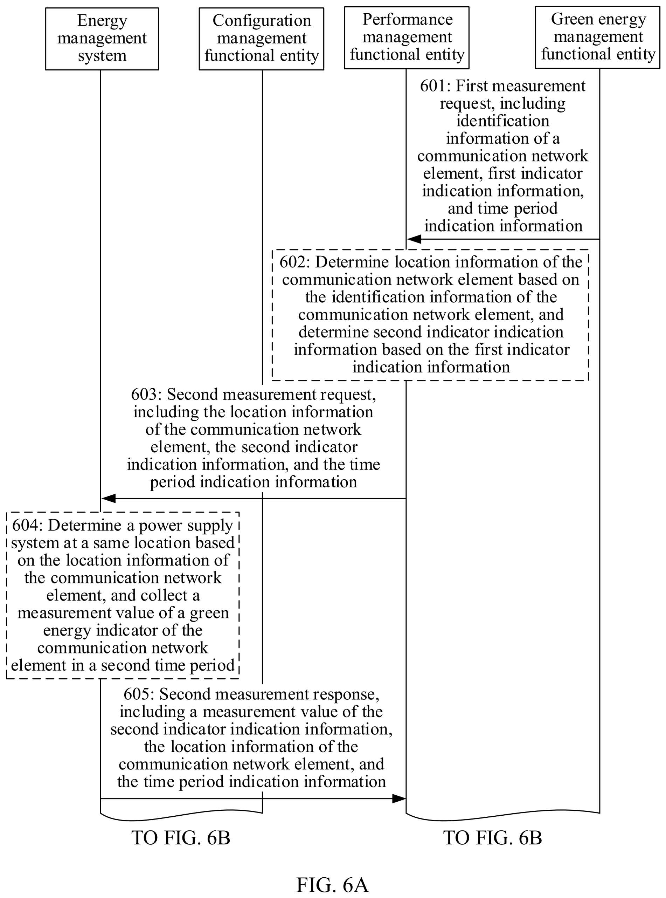

For example, after receiving the first measurement request, the performance management functional entity may collect the measurement value of the green energy indicator from an energy management system. For a specific manner in which the performance management functional entity learns of the measurement value of the green energy indicator, refer to FIG. 6A and FIG. 6B, FIG. 7A to FIG. 7C, or FIG. 8A and FIG. 8B.

In an example, the measurement value of the green energy indicator may be a real value of the green energy indicator collected by the energy management system. The real value is fed back, so that the green energy management functional entity can more accurately control the green energy usage of the communication network element, thereby improving control efficiency.

In another example, the measurement value of the green energy indicator may be a value obtained by optimizing a real value of the green energy indicator collected by the energy management system. For example, the optimized value is fed back, so that signaling overheads can be reduced. A specific manner of the optimization is not limited in embodiments of this application.

A quantity of measurement values fed back in the first measurement response is determined based on a quantity of indicators in the first measurement request. In an example, the quantity of indicators that are requested to be measured in the first measurement request is the same as the quantity of measurement values fed back in the first measurement response. In another example, the quantity of measurement values fed back in the first measurement response may be less than the quantity of indicators that are requested to be measured in the first measurement request. For example, the performance management functional entity may indicate a reason in the first measurement response, to describe a reason why the quantity of measurement values fed back in the first measurement response is less than the quantity of indicators that are requested to be measured in the first measurement request.

For related descriptions of step 402 in FIG. 4a, refer to step 302. For related descriptions of step 403, refer to step 303. Details are not described herein.

In this embodiment of this application, the green energy management functional entity determines green energy management indication information by using the measurement value of the green energy indicator of the communication network element and a requirement on the green energy indicator, to adjust the green energy usage of the communication network element as required, accurately optimize the green energy usage, and improve flexibility of green energy management.

Implementation 2

In another possible implementation, the green energy decision factor includes a mapping relationship between a unit price of non-green energy and a time period.

FIG. 4b is a diagram of another method for obtaining a green energy decision factor according to an embodiment of this application. As shown in FIG. 4b, that the green energy management functional entity obtains the green energy decision factor may include the following steps.

411: Obtain a mapping relationship between a unit price of non-green energy and a time period.

The time period may be a continuous time period in a day, or may be a discontinuous time period in a day. For example, the unit price includes a first unit price and a second unit price, the first unit price may correspond to one or more time periods, and the second unit price may correspond to one or more time periods. The time period corresponding to the first unit price does not overlap the time period corresponding to the second unit price.

In an example, if the mapping relationship may indicate that a unit price of the non-green energy in a first time period is higher than a unit price of the non-green energy in a third time period, green energy management indication information may indicate that green energy usage in the first time period is greater than green energy usage in the third time period. If the mapping relationship indicates that a unit price of the non-green energy in a first time period is lower than or equal to a unit price of the non-green energy in a third time period, green energy management indication information indicates that green energy usage in the first time period is less than green energy usage in the third time period. For example, if the mapping relationship indicates that the unit price of the non-green energy in the first time period is higher than the unit price of the non-green energy in the third time period, the green energy management indication information indicates that the green energy usage in the first time period is greater than zero. If the mapping relationship indicates that the unit price of the non-green energy in the first time period is lower than or equal to the unit price of the non-green energy in the third time period, the green energy management indication information indicates that the green energy usage in the first time period is zero.

In another example, if the mapping relationship indicates that a power consumption cost of the non-green energy in a first time period is higher than a power consumption cost of the non-green energy in a third time period, green energy management indication information may indicate that green energy usage in the first time period is greater than green energy usage in the third time period. The power consumption cost may include the unit price and the like. For related descriptions of the power consumption cost, refer to the foregoing descriptions of the unit price. Details are not described herein again.

For example, the first time period may be a power consumption peak period, and the third time period may be a power consumption flat period. Alternatively, the first time period is a power consumption peak period, and the third time period is a power consumption off-peak period. Alternatively, the first time period is a power consumption flat period, and the third time period is a power consumption off-peak period. Alternatively, the first time period may be a power consumption peak period, and the third time period may be a power consumption flat period and a power consumption off-peak period. For example, the power consumption peak period may be at least one of the following time periods: 9:00 to 11:30, 14:00 to 16:30, and 19:00 to 21:00. The power consumption flat period may be at least one of the following time periods: 7:00 to 9:00, 11:30 to 14:00, 16:30 to 19:00, and 21:00 to 23:00. The power consumption off-peak period may be the following time period: 23:00 to 7:00 of a next day. The power consumption peak period, the power consumption flat period, and the power consumption off-peak period listed herein are merely examples, and should not be understood as a limitation on embodiments of this application.

For related descriptions of step 412 in FIG. 4b, refer to step 302. For related descriptions of step 413, refer to step 303. Details are not described herein.

In this embodiment of this application, the green energy management functional entity determines the green energy management indication information by using the mapping relationship between the unit price of the non-green energy and the time period. This not only implements green energy management, but also is simple and efficient.

Implementation 3

In still another possible implementation, the green energy decision factor includes a measurement value of and a requirement on a green energy indicator of a communication network element, and a mapping relationship between a unit price of non-green energy and a time period. The green energy management functional entity may determine green energy management indication information with reference to the foregoing information. For specific descriptions of this implementation, refer to FIG. 4a and FIG. 4b. Details are not described herein again.

302: The green energy management functional entity sends the green energy management indication information based on the green energy decision factor. Correspondingly, the configuration management functional entity receives the green energy management indication information. The green energy management indication information is used to control the green energy usage of the communication network element in the first time period.

That the green energy management indication information is used to control the green energy usage of the communication network element in the first time period may also be referred to as that the green energy management indication information is used to adjust the green energy usage of the communication network element in the first time period. The first time period may also be represented as an effective time period of the green energy management indication information, or start-stop time in which the green energy management indication information takes effect.

In an example, the green energy management indication information may include indication information indicating that the communication network element enables green energy in the first time period, or include indication information indicating that the communication network element disables green energy in the first time period. For example, the green energy management indication information may include a 1-bit enabling/disabling indication, the identification information of the communication network element, and indication information of the first time period. If the green energy management indication information includes a green energy enabling indication, the configuration management functional entity or the energy management system may autonomously control the green energy usage of the communication network element. If the green energy management indication information includes a green energy disabling indication, it indicates that the green energy usage of the communication network element is zero.

In another example, the green energy management indication information may include at least one of the following:

A. Increase amount or decrease amount of the green energy usage in the first time period. For example, the increase amount or the decrease amount may be an increase amount or a decrease amount relative to green energy usage of the communication network element in the second time period.

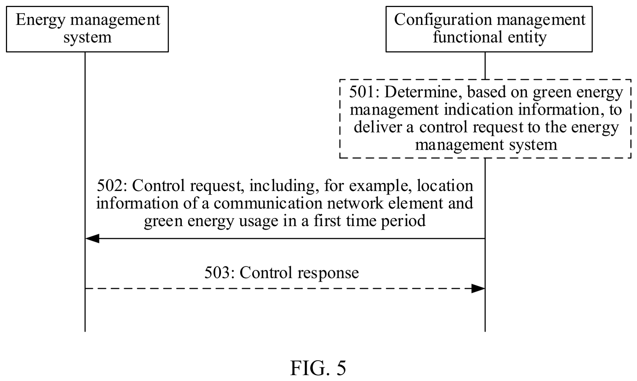

B. Green energy usage in the first time period. For ease of description, FIG. 5, FIG. 6A and FIG. 6B, FIG. 7A to FIG. 7C, and FIG. 8A and FIG. 8B are shown by using an example in which the green energy management indication information includes the green energy usage in the first time period. However, this should not be understood as a limitation on embodiments of this application.

C. Indication information indicating to increase the green energy usage in the first time period. The indication information indicating to increase the green energy usage indicates that the configuration management functional entity may control the communication network element to increase green energy consumption based on the green energy usage in the first time period. A specific increase amount of the green energy usage may be set by the configuration management functional entity or the energy management system. This is not limited in embodiments of this application.

D. Indication information indicating to decrease the green energy usage in the first time period. The indication information indicating to decrease the green energy usage indicates that the configuration management functional entity may control the communication network element to decrease green energy consumption based on the green energy usage in the first time period. A specific decrease amount of the green energy usage may be set by the configuration management functional entity or the like. This is not limited in embodiments of this application.

E. Green energy proportion in the first time period.

F. Increase amount or decrease amount of the green energy proportion in the first time period.

G. Indication information indicating to increase or decrease the green energy proportion in the first time period. For related descriptions of F and G, refer to B to D.

The green energy management indication may include any one of A to D and/or any one of E to G. When the green energy usage of the communication network element in the first time period is zero, it indicates that the green energy management indication information indicates that the communication network element disables the green energy in the first time period. When the green energy usage of the communication network element in the first time period is not zero, it indicates that the green energy management indication information indicates that the communication network element enables the green energy in the first time period.

For example, the green energy management indication information may further include the identification information of the communication network element. The green energy management indication information includes the identification information of the communication network element, to clearly indicate a communication network element on which green energy management is performed. Therefore, the green energy management functional entity may flexibly manage green energy of various communication network elements. When the green energy management indication information does not include the identification information of the communication network element, green energy management may be performed on the communication network element by default. If the green energy management indication information does not include the identification information of the communication network element, signaling overheads can be effectively reduced.

In a possible implementation, in step 402 shown in FIG. 4a, the green energy management functional entity may send the green energy management indication information based on a difference between the measurement value and the requirement.

For example, when the measurement value of the green energy indicator deviates from the requirement, for example, the green energy supply does not satisfy the required value, the green energy management functional entity determines that measures need to be taken to cope with the deviation. For example, the green energy management functional entity may analyze, by using a management data analytics service (management data analysis service, MDAS), the measurement value of the green energy indicator collected by the communication network element, to obtain specific green energy management indication information. For another example, the green energy management functional entity may simulate current green energy usage of the communication network element by using a network twin, and obtain appropriate green energy management indication information through network model simulation.

In another possible implementation, in step 412 shown in FIG. 4b, the green energy management functional entity may send the green energy management indication information based on the mapping relationship between the unit price of the non-green energy and the time period.

The green energy management functional entity may determine the green energy management indication information based on a mapping relationship between a power consumption time period and the unit price. For example, the unit price of the non-green energy varies with the power consumption time period. Therefore, the green energy management functional entity may deliver the green energy management indication information with reference to the power consumption time period and the unit price. For example, the green energy supply varies with a lighting condition or weather. Therefore, the green energy management functional entity may alternatively send the green energy management indication information based on the foregoing mapping relationship and the green energy supply. The green energy management functional entity may deliver the green energy management indication information in consideration of a power consumption policy (for example, the mapping relationship may be provided inside a cross-domain management system or delivered by a BSS layer). For example, in consideration of the power consumption cost, the green energy management indication information may indicate to increase a green energy usage proportion of power consumption in the power consumption peak period. For another example, the green energy management functional entity may further dynamically adjust a green energy usage proportion in each time period with reference to a factor like the lighting condition, to ensure green energy usage in the peak period. In this way, overall optimization of carbon emission across one or more power consumption time periods is implemented.

In still another possible implementation, the green energy management functional entity may send the green energy management indication information based on the measurement value of and the requirement on the green energy indicator of the communication network element, and the mapping relationship between the unit price of the non-green energy and the time period.

For example, a solar energy supply in a time period 1 is sufficient, and the time period 1 is a power consumption flat period. A time period 2 is a power consumption peak period, and it is predicted, based on weather, that it will rain in the time period 2 (for example, this is implemented by using a sensing prediction capability of a twin service entity of the network management system, or weather prediction information is manually input). The lighting condition is affected. After requesting to measure green energy supplies in the time period 1 and the time period 2, the green energy management functional entity finds that the green energy supply of the communication network element in the time period 2 does not reach a required value (the green energy supply in the time period 2 may be predicted by the energy management system with reference to the lighting condition). Therefore, the green energy management functional entity compares an overall power consumption cost in the time period 1 with that is in the time period 2, to reduce green energy usage of the communication network element in the time period 1 (a reduction amplitude does not trigger an alarm), so that redundant green energy is stored in an energy storage device (for example, the battery shown in FIG. 2). In this way, the communication network element can use the stored green energy in the time period 2, the green energy supply of the communication network element in the time period 2 increases, and a total amount of used mains electricity decreases.

According to this embodiment of this application, a problem that the green energy supply of the communication network element in the time period 2 is insufficient is resolved, and the green energy supply of the communication network element in the time period 2 is increased. Because a mains electricity price in the time period 2 is higher than a mains electricity price in the time period 1, the green energy usage of the communication network element in the time period 1 is reduced, and green energy usage of the communication network element in the time period 2 is increased, to reduce mains electricity usage of the communication network element in the time period 2, thereby effectively reducing a power consumption cost of the operator.

According to the green energy management method shown in this embodiment of this application, not only green energy management can be optimized, but also non-green energy overheads can be reduced, thereby optimizing overall performance of energy management.

303: The configuration management functional entity controls the green energy usage of the communication network element based on the green energy management indication information.

In the system architecture shown in FIG. 2, the configuration management functional entity may be responsible for configuration management of the communication network element. Therefore, after receiving the green energy management indication information, the configuration management functional entity may configure the green energy usage of the communication network element.

FIG. 5 is a diagram of a method for controlling green energy usage according to an embodiment of this application. FIG. 5 shows an example of a method for configuring green energy usage of a communication network element by a configuration management functional entity. As shown in FIG. 5, the method for configuring the green energy usage by the configuration management functional entity is as follows:

In a possible implementation, the method shown in FIG. 5 includes step 501.

501: The configuration management functional entity determines, based on green energy management indication information, to deliver a control request to an energy management system.

For example, the configuration management functional entity may determine location information of the communication network element based on identification information of the communication network element in the green energy management indication information, or determine, based on identification information of the communication network element, identification information of a power supply system corresponding to the communication network element. After determining the location information of the communication network element or the identification information of the power supply system, the configuration management functional entity may send the control request to the energy management system.

For example, the control request may alternatively not include the location information of the communication network element, and the identification information of the power supply system corresponding to the communication network element is determined based on the identification information of the communication network element.

502: The configuration management functional entity sends the control request. Correspondingly, the energy management system receives the control request. The control request is used to request to control the green energy usage of the communication network element.

For example, the control request may include at least one of the following:

an increase amount or a decrease amount of green energy usage in a first time period;
green energy usage in a first time period; or
indication information indicating to increase green energy usage in a first time period, or indication information indicating to decrease green energy usage in a first time period.

For specific descriptions of the foregoing content in the control request, refer to the related descriptions of the green energy management indication information. Details are not described herein again.

For example, the control request may alternatively include the location information of the communication network element, or the identification information of the power supply system corresponding to the communication network element. Therefore, after receiving the control request, the energy management system may effectively learn of an object whose green energy usage is to be adjusted. For example, the energy management system may adjust power supply power of a solar photovoltaic panel to adjust the green energy usage or a green energy supply of the communication network element.

In a possible implementation, the method shown in FIG. 5 may further include step 503.

503: The energy management system sends a control response. Correspondingly, the configuration management functional entity receives the control response. The control response indicates a control result of the green energy usage of the communication network element in the first time period. The control response may be a result returned by the energy management system after the energy management system adjusts the green energy usage.

In a possible implementation, the method shown in FIG. 3 may further include the following step.

304: The configuration management functional entity sends feedback information of the green energy management indication information. Correspondingly, the green energy management functional entity receives the feedback information. The feedback information indicates the control result of the green energy usage of the communication network element in the first time period.

For example, the configuration management functional entity may send the feedback information of the green energy management indication information based on the control response. For related descriptions of the feedback information, refer to the control response. Based on different managed objects of the energy management system and the network management system, the control response may include the location information of the communication network element, or the identification information of the power supply system corresponding to the communication network element, and the feedback information may include the identification information of the communication network element. Alternatively, the control response may include an index, an identifier, or the like of the green energy management indication information, and the feedback information includes the index, the identifier, or the like of the green energy management indication information.

For example, the configuration management functional entity may alternatively not send the feedback information. That the configuration management functional entity does not send the feedback information indicates that the green energy management functional entity does not care about the control result of the green energy usage of the communication network element in the first time period, or by default, the configuration management functional entity controls the control result of the green energy usage of the communication network element in the first time period based on the green energy management indication information. The descriptions of the feedback information are also applicable to the control response. The control result may also be referred to as an adjustment result.

In this embodiment of this application, the green energy management functional entity obtains the green energy decision factor, and may send the green energy management indication information based on the green energy decision factor, to manage the green energy usage of the communication network element, and improve a capability of the network management system to control energy usage of the communication network element.

In this embodiment of this application, the green energy management functional entity in the network management system may determine the green energy management indication information with reference to the green energy decision factor, to adjust the green energy usage of the communication network element based on the green energy management indication information. In comparison with the solution of adjusting the green energy usage via the energy management system shown in FIG. 1, in this embodiment of this application, diversified requirements of managing the communication network element by the network management system can be satisfied, for example, managing the green energy usage of the communication network element, and for another example, controlling the power consumption cost of the communication network element. In addition, a factor that affects the green energy usage of the communication network element is further added, and the green energy usage of the communication network element is accurately optimized. As shown in FIG. 1, influencing factors are the lighting condition and the mains electricity status. In this embodiment of this application, not only the measurement value of and the requirement on the green energy indicator are considered, but also the power consumption time period and the unit price are considered. In this way, the capability of the network management system to control the energy usage of the communication network element is improved, and overall green energy indicator performance of a communication network is optimized.

To further understand the green energy management method provided in embodiments of this application, the following describes in detail the green energy management method shown in embodiments of this application.

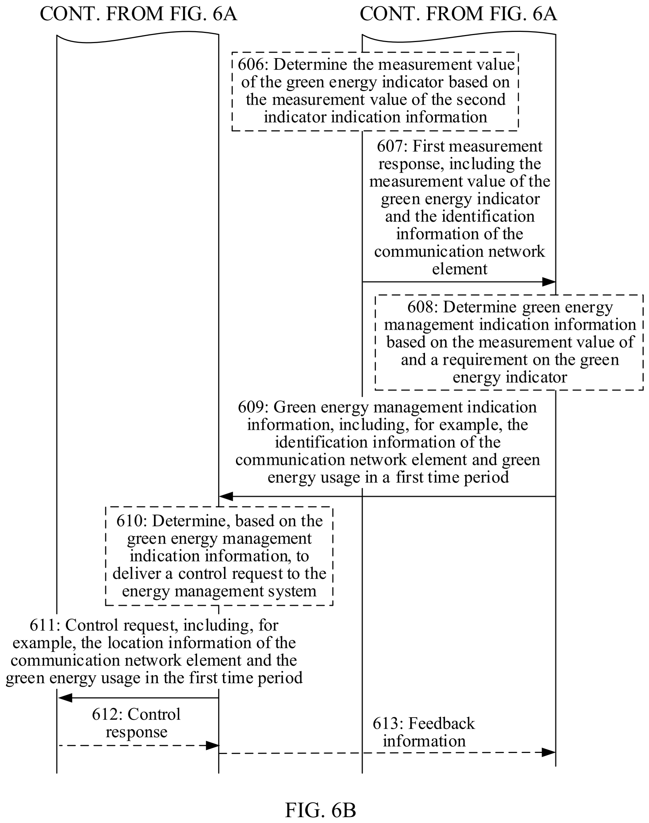

FIG. 6A and FIG. 6B are a schematic flowchart of a green energy management method according to an embodiment of this application. As shown in FIG. 6A and FIG. 6B, the method includes the following steps.

601: A green energy management functional entity sends a first measurement request. Correspondingly, a performance management functional entity receives the first measurement request.

For related descriptions of the first measurement request, refer to FIG. 4a. Details are not described herein again. In FIG. 6A and FIG. 6B, an example in which the first measurement request includes identification information of a communication network element, first indicator indication information, and time period indication information is used. However, this should not be understood as a limitation on embodiments of this application. The time period indication information shown herein indicates a second time period. The second time period indicates that the performance management functional entity needs to collect a measurement value of a green energy indicator of the communication network element in the second time period.

602: The performance management functional entity determines location information of the communication network element based on the identification information of the communication network element.

It can be learned from the foregoing descriptions of FIG. 2 that a managed object of an energy management system is different from a managed object of a network management system. Therefore, the performance management functional entity needs to determine the location information of the communication network element based on the identification information of the communication network element.

It can be learned from the foregoing term descriptions of the green energy indicator that the energy management system cannot collect two indicators: carbon intensity and carbon efficiency. Therefore, when the green energy indicator is at least one of the carbon intensity and the carbon efficiency, the performance management functional entity needs to convert the first indicator indication information into second indicator indication information. For example, when a green energy indicator indicated by the first indicator indication information is the carbon intensity, a green energy indicator indicated by the second indicator indication information may be carbon emission or a carbon dioxide equivalent. For another example, when a green energy indicator indicated by the first indicator indication information is the carbon efficiency, a green energy indicator indicated by the second indicator indication information may be carbon emission. The carbon emission or the carbon dioxide equivalent obtained by converting the carbon intensity or the carbon efficiency may be referred to as green energy usage information or a green energy usage information name, and the green energy usage information or the green energy usage information name may be collected by the energy management system. When the green energy indicator is at least one of a green energy proportion, green energy usage, a green energy supply, or the carbon emission, the second indicator indication information may be the same as the first indicator indication information. To be specific, the second indicator indication information in a second measurement request shown below may be the green energy proportion, the green energy usage, the green energy supply, or the carbon emission that is indicated by the first indicator indication information, or may be the carbon emission or the carbon dioxide equivalent that needs to be collected in the energy management system for calculating the carbon intensity or the carbon efficiency.

Step 602 shown in FIG. 6A and FIG. 6B is shown by using an example in which the green energy indicator includes at least one of the carbon intensity or the carbon efficiency. For example, the performance management functional entity determines the location information of the communication network element based on the identification information of the communication network element, and determines the second indicator indication information based on the first indicator indication information.

603: The performance management functional entity sends the second measurement request. Correspondingly, the energy management system receives the second measurement request.

For example, the performance management functional entity may send the second measurement request based on the first measurement request. Content in the second measurement request may be determined based on the first measurement request. If the first measurement request includes the identification information of the communication network element, the first indicator indication information, and the time period indication information, the second measurement request may include the location information of the communication network element, the second indicator indication information, and the time period indication information (as shown in FIG. 6A and FIG. 6B). For example, the performance management functional entity may request a configuration management functional entity to obtain the location information of the communication network element. The location information of the communication network element may be used to determine a corresponding power supply system in the energy management system. For descriptions of the identification information and the location information of the communication network element, refer to FIG. 2.

604: The energy management system determines a power supply system at a same location based on the location information of the communication network element, and collects the measurement value of the green energy indicator of the communication network element in the second time period.

For example, the energy management system may collect an energy supply of the power supply system in the second time period, for example, an energy supply of an SSU and/or a PSU, and calculate the green energy indicator.

605: The energy management system sends a second measurement response. Correspondingly, the performance management functional entity receives the second measurement response.

For example, the second measurement response may include a measurement value of the second indicator indication information, the location information of the communication network element, and the time period indication information.

606: The performance management functional entity determines the measurement value of the green energy indicator based on the measurement value of the second indicator indication information.

If the green energy indicator indicated by the second indicator indication information is the carbon emission, and the green energy indicator indicated by the first indicator indication information is the carbon efficiency or the carbon intensity, the performance management functional entity further needs to calculate the carbon efficiency or carbon intensity based on the carbon emission. For a specific calculation manner, refer to Formula (1) to Formula (6). Details are not described herein again.

The measurement value of the green energy indicator may be shown as follows: For example, a measurement value of the green energy proportion may be 50%, a measurement value of the green energy usage may be 2.5 kilowatt-hours, a measurement value of the green energy supply may be 4 kilowatt-hours, the carbon emission may be 3 kg of $CO_2eq$, and the carbon intensity may be 3 g of $CO_2eq$/bit.

607: The performance management functional entity sends a first measurement response. Correspondingly, the green energy management functional entity receives the first measurement response.

For specific descriptions of the first measurement response, refer to FIG. 4a. Details are not described herein again. For example, the first measurement response includes the measurement value of the green energy indicator and the identification information of the communication network element.

608: The green energy management functional entity determines green energy management indication information based on the measurement value of and a requirement on the green energy indicator.

For specific descriptions of the measurement value of and the requirement on the green energy indicator, refer to FIG. 4a. Details are not described herein again.

609: The green energy management functional entity sends the green energy management indication information. Correspondingly, the configuration management functional entity receives the green energy management indication information.

For specific descriptions of the green energy management indication information, refer to FIG. 3. Details are not described herein again. For example, the green energy management indication information includes the identification information of the communication network element and green energy usage in a first time period.

610: The configuration management functional entity determines, based on the green energy management indication information, to deliver a control request to the energy management system.

For example, the configuration management functional entity may determine, based on the green energy management indication information, to deliver the control request to the energy management system, to request the energy management system to adjust a green energy usage status of the communication network element.

611: The configuration management functional entity sends the control request. Correspondingly, the energy management system receives the control request.

For specific descriptions of the control request and a control response, refer to FIG. 5. Details are not described herein again. For example, the control request includes the location information of the communication network element and the green energy usage in the first time period.

After receiving the control request, the energy management system may perform green energy usage adjustment, for example, adjust power supply power of a solar photovoltaic panel to adjust the green energy supply.

612: The energy management system sends the control response. Correspondingly, the configuration management functional entity receives the control response.

613: The configuration management functional entity sends feedback information. Correspondingly, the green energy management functional entity receives the feedback information.

For specific descriptions of the feedback information, refer to FIG. 3. Details are not described herein again. Step 612 and step 613 shown in FIG. 6A and FIG. 6B may be optional. For descriptions of the control response and the feedback information, refer to the foregoing descriptions. Details are not described herein again.

The method shown in FIG. 6A and FIG. 6B is shown by using an example in which the green energy management functional entity sends the green energy management indication information based on the measurement value of and the requirement on the green energy indicator. In the method shown in FIG. 3, the green energy management functional entity may further deliver the green energy management indication information based on a mapping relationship or with reference to a mapping relationship and the measurement value of the green energy indicator. Details are not described herein again.

In this embodiment of this application, interaction between the network management system and the energy management system is established, so that the energy management system can measure and monitor the green energy indicator (for example, base station carbon efficiency) of the communication network element, and adjust green energy usage based on the green energy management indication information delivered by the green energy management functional entity. In this way, the green energy usage is adjusted as required, thereby optimizing the carbon efficiency indicator, and achieving low carbon and emission reduction. The green energy management functional entity flexibly delivers the green energy management indication information by considering factors such as the measurement value of and the requirement on the green energy indicator of the communication network element, thereby effectively optimizing the carbon efficiency indicator.

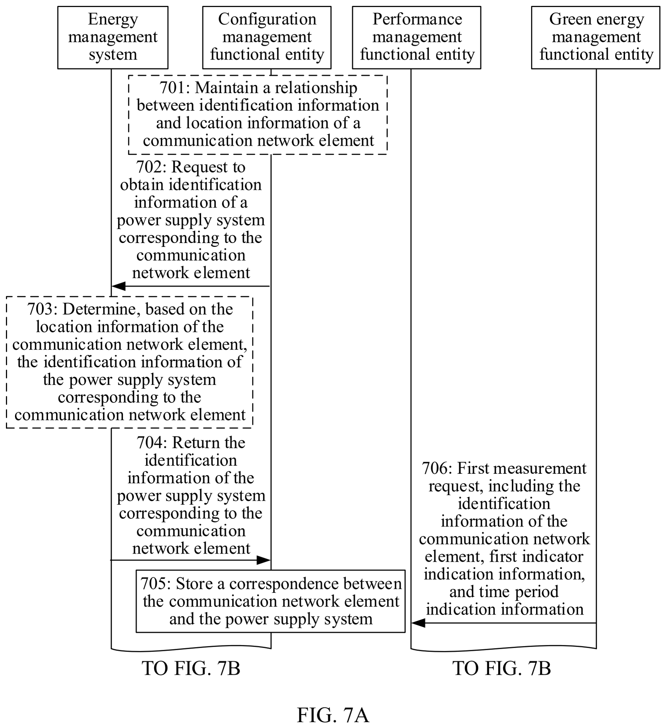

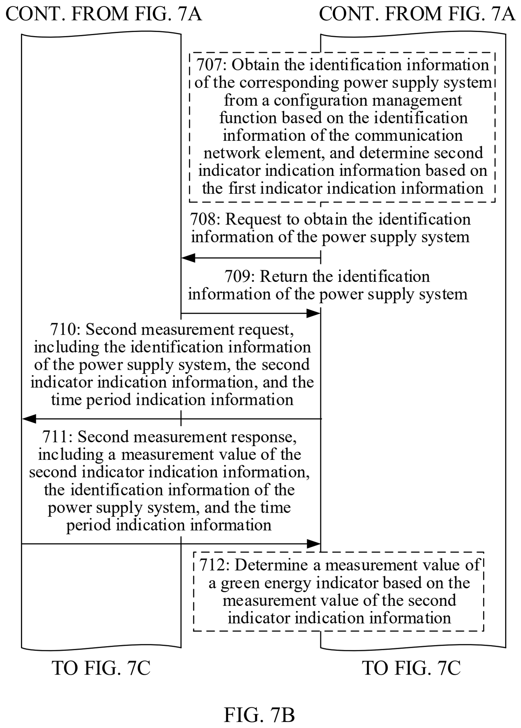

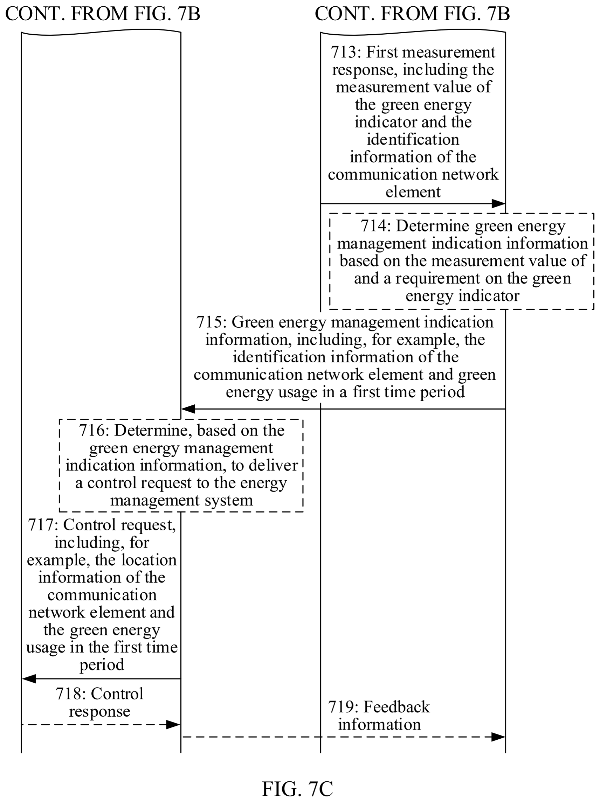

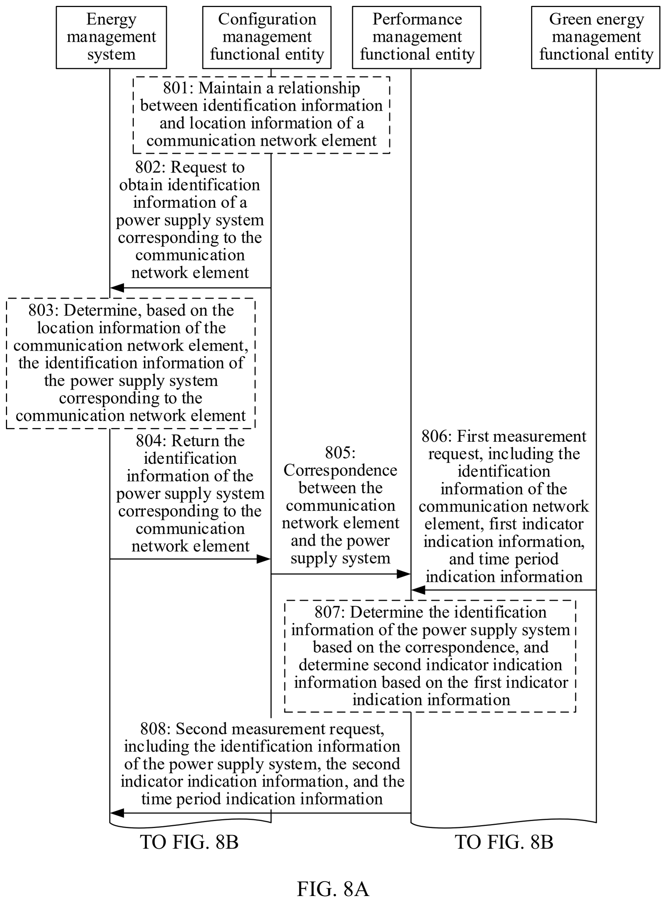

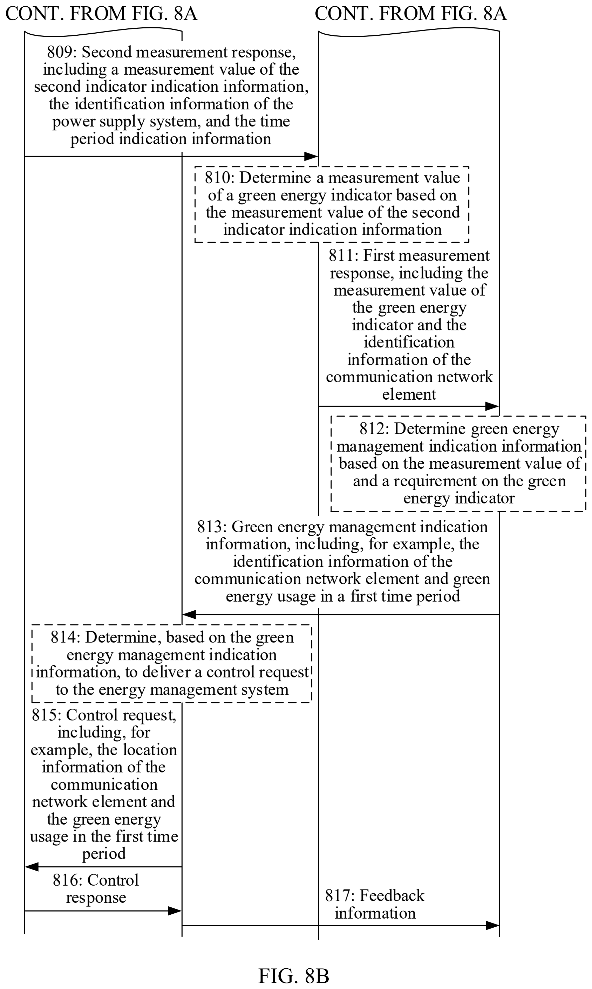

In the method shown in FIG. 6A and FIG. 6B, the managed objects of the network management system and the energy management system are associated by using the identification information and the location information of the communication network element. In methods shown in FIG. 7A to FIG. 7C and FIG. 8A and FIG. 8B, the managed objects of the network management system and the energy management system are managed by using a relationship between the communication network element and the power supply system. The following describes FIG. 7A to FIG. 7C and FIG. 8A and FIG. 8B in detail.

FIG. 7A to FIG. 7C are a schematic flowchart of another green energy management method according to an embodiment of this application. As shown in FIG. 7A to FIG. 7C, the method includes the following steps.

701: A configuration management functional entity maintains a relationship between identification information and location information of a communication network element.

For example, the configuration management functional entity may maintain a relationship between identification information and location information of each communication network element in a network management system.

702: The configuration management functional entity requests to obtain identification information of a power supply system corresponding to the communication network element.

For example, the configuration management functional entity may send a request, and an energy management system receives the request. For example, the request may be used to request to obtain identification information of a power supply system corresponding to one or more communication network elements. For example, the request may include the location information of the communication network element.

703: The energy management system determines, based on the location information of the communication network element, the identification information of the power supply system corresponding to the communication network element.

704: The energy management system returns the identification information of the power supply system corresponding to the communication network element.

For example, the energy management system may send a response, and the configuration management functional entity receives the response. For example, the response may include the location information of the communication network element and the identification information of the power supply system corresponding to the communication network element.

705: The configuration management functional entity stores a correspondence between the communication network element and the power supply system.

For example, the correspondence may be a relationship between the identification information of the communication network element and the identification information of the power supply system, a relationship between the location information of the communication network element and the identification information of the power supply system, or a relationship between the identification information of the communication network element, the location information of the communication network element, and the identification information of the power supply system.

The energy management system implements a collaborative configuration process with the network management system to implement a correspondence between a site energy system identifier and the communication network element. The correspondence may be determined through manual matching during network construction. For example, when a base station with a photovoltaic deployment capability is installed, an identifier of the base station may correspond to an identifier of a solar power supply system.

706: A green energy management functional entity sends a first measurement request. Correspondingly, a performance management functional entity receives the first measurement request.

For specific descriptions of the first measurement request, refer to FIG. 4a, FIG. 6A and FIG. 6B, or the like. Details are not described herein again.

707: The performance management functional entity obtains the identification information of the corresponding power supply system from the configuration management functional entity based on the identification information of the communication network element, and determines second indicator indication information based on first indicator indication information.

708: The performance management functional entity requests to obtain the identification information of the power supply system.

For example, the performance management functional entity may send a request including the identification information of the communication network element, and the request may be used to request to obtain the identification information of the power supply system corresponding to the communication network element. After receiving the request, the configuration management functional entity may determine the identification information of the power supply system based on the correspondence stored in the configuration management functional entity.

709: The configuration management functional entity returns the identification information of the power supply system.

710: The performance management functional entity sends a second measurement request. Correspondingly, the energy management system receives the second measurement request.

After the energy management system receives the second measurement request, the energy management system may determine the power supply system based on the identification information of the power supply system, and collect a measurement value of a green energy indicator of the communication network element in a third time period.

711: The energy management system sends a second measurement response. Correspondingly, the performance management functional entity receives the second measurement response.

Because the performance management functional entity has learned of the identification information of the power supply system, the second measurement response may include the identification information of the power supply system. Therefore, the energy management system obtains the identification information of the power supply system, and may learn of a power supply system via which the energy management system needs to collect the green energy indicator of the communication network element.

712: The performance management functional entity determines the measurement value of the green energy indicator based on a measurement value of the second indicator indication information.

713: The performance management functional entity sends a first measurement response. Correspondingly, the green energy management functional entity receives the first measurement response.

714: The green energy management functional entity determines green energy management indication information based on the measurement value of and a requirement on the green energy indicator.

715: The green energy management functional entity sends the green energy management indication information. Correspondingly, the configuration management functional entity receives the green energy management indication information.

716: The configuration management functional entity determines, based on the green energy management indication information, to deliver a control request to the energy management system.

717: The configuration management functional entity sends the control request. Correspondingly, the energy management system receives the control request.

718: The energy management system sends a control response. Correspondingly, the configuration management functional entity receives the control response.

719: The configuration management functional entity sends feedback information. Correspondingly, the green energy management functional entity receives the feedback information.

For specific descriptions of step 710 to step 719, refer to FIG. 3, FIG. 4a, FIG. 6A and FIG. 6B, or the like. Details are not described herein again.

FIG. 8A and FIG. 8B are a schematic flowchart of another green energy management method according to an embodiment of this application. As shown in FIG. 8A and FIG. 8B, the method includes the following steps.

801: A configuration management functional entity maintains a relationship between identification information and location information of a communication network element.

802: The configuration management functional entity requests to obtain identification information of a power supply system corresponding to the communication network element.

803: An energy management system determines, based on the location information of the communication network element, the identification information of the power supply system corresponding to the communication network element.

804: The energy management system returns the identification information of the power supply system corresponding to the communication network element.

For specific descriptions of step 801 to step 804, refer to step 701 to step 704 in FIG. 7A to FIG. 7C. Details are not described herein again.

805: The configuration management functional entity sends a correspondence between the communication network element and the power supply system, and a performance management functional entity receives the correspondence.

For example, after receiving the correspondence, the performance management functional entity may store the correspondence.

806: A green energy management functional entity sends a first measurement request. Correspondingly, the performance management functional entity receives the first measurement request.

For specific descriptions of the first measurement request, refer to FIG. 4a, FIG. 6A and FIG. 6B, or the like. Details are not described herein again.

807: The performance management functional entity determines the identification information of the power supply system based on the correspondence, and determines second indicator indication information based on first indicator indication information.

For example, the performance management functional entity may determine, based on the correspondence, the identification information of the power supply system corresponding to the identification information of the communication network element.

808: The performance management functional entity sends a second measurement request. Correspondingly, the energy management system receives the second measurement request.

809: The energy management system sends a second measurement response. Correspondingly, the performance management functional entity receives the second measurement response.

810: The performance management functional entity determines a measurement value of a green energy indicator based on a measurement value of the second indicator indication information.

811: The performance management functional entity sends a first measurement response. Correspondingly, the green energy management functional entity receives the first measurement response.

812: The green energy management functional entity determines green energy management indication information based on the measurement value of and a requirement on the green energy indicator.

813: The green energy management functional entity sends the green energy management indication information. Correspondingly, the configuration management functional entity receives the green energy management indication information.

814: The configuration management functional entity determines, based on the green energy management indication information, to deliver a control request to the energy management system.

815: The configuration management functional entity sends the control request. Correspondingly, the energy management system receives the control request.

816: The energy management system sends a control response. Correspondingly, the configuration management functional entity receives the control response.

817: The configuration management functional entity sends feedback information. Correspondingly, the green energy management functional entity receives the feedback information.

For specific descriptions of step 808 to step 817, refer to FIG. 7A to FIG. 7C. Details are not described herein again.

An embodiment of this application further provides a method for obtaining a measurement value of a green energy indicator. A green energy management functional entity sends a first measurement request and receives a first measurement response, to clearly learn of a measurement value of a green energy indicator of a communication network element, so that the green energy management functional entity can adjust green energy usage of the communication network element based on the green energy indicator of the communication network element. Certainly, the measurement value of the green energy indicator obtained by the green energy management functional entity may alternatively be used for another purpose. This is not limited in embodiments of this application.

The green energy management functional entity may clearly learn of the measurement value of the green energy indicator of the communication network element through step 601 to step 607 shown in FIG. 6A and FIG. 6B, step 706 to step 713 shown in FIG. 7A to FIG. 7C, and step 806 to step 811 shown in FIG. 8A and FIG. 8B. For a method for obtaining the measurement value of the green energy indicator, refer to the foregoing descriptions. Details are not described herein again.

The foregoing embodiments are shown by using interaction between the green energy management functional entity, the performance management functional entity, the configuration management functional entity, and the energy management system as an example. When an interface between the foregoing network elements changes, for example, the green energy management functional entity may directly interact with the energy management system, the method shown in embodiments of this application may also be applied to the green energy management functional entity and the energy management system.

Currently, there is a method for adjusting an energy saving state. However, in the method for adjusting the energy saving state, a centralized energy saving management service provider can analyze, based only on a data volume, whether to enable the energy saving state. In comparison with the foregoing method for adjusting the energy saving state, in embodiments of this application, not only green energy can be managed, but also green energy management indication information can be determined with reference to more green energy decision factors, to optimize the green energy management and improve flexibility of the green energy management.

The following describes the network elements provided in embodiments of this application.

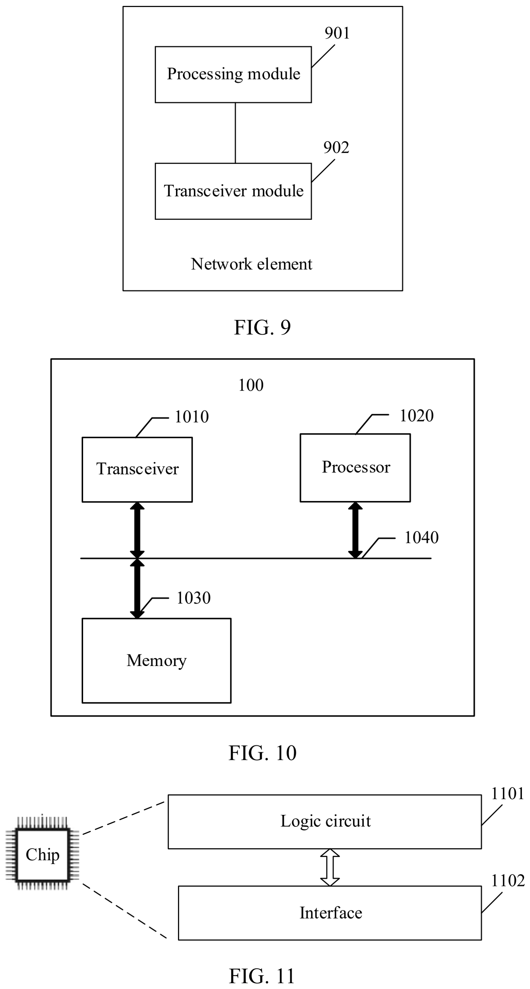

In this application, the network element is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely logical function division. In actual implementation, another division manner may be used. The following describes in detail the network elements in embodiments of this application with reference to FIG. 9 to FIG. 11.

FIG. 9 is a diagram of a structure of a network element according to an embodiment of this application. As shown in FIG. 9, the network element includes a processing module 901 and a transceiver module 902. The transceiver module 902 may implement a corresponding communication function, and the processing module 901 is configured to process data. For example, the transceiver module 902 may also be referred to as an interface, a communication interface, a communication module, or the like.

In some embodiments of this application, the network element may be configured to perform actions performed by the first network element in the foregoing method embodiments. In this case, the network element may be a green energy management functional entity, a functional module that can be configured in the green energy management functional entity, or the like. The transceiver module 902 is configured to perform receiving and sending related operations of the first network element in the foregoing method embodiments. The processing module 901 is configured to perform a processing related operation of the first network element in the foregoing method embodiments.

For example, the processing module 901 is configured to: obtain a green energy decision factor, and send or output green energy management indication information based on the green energy decision factor.

For example, the processing module 901 may obtain a measurement value of a green energy indicator through the transceiver module 902. For example, the processing module 901 may determine the green energy management indication information based on the green energy decision factor, and output or send the green energy management indication information through the transceiver module 902.

For example, the transceiver module 902 is further configured to: send (or output) a first measurement request, and receive (or input) a first measurement response.

Before the transceiver module 902 sends the first measurement request, the processing module 901 may be further configured to determine the first measurement request. After the transceiver module 902 receives the first measurement response, the processing module 901 may parse the first measurement response to obtain the measurement value of the green energy indicator and the like. The related descriptions of the transceiver module and the processing module herein are also applicable to the following.

For example, the transceiver module 902 is further configured to receive (or input) feedback information of the green energy management indication information.

FIG. 9 is reused. In some other embodiments of this application, the network element may be configured to perform actions performed by the second network element in the foregoing method embodiments. In this case, the network element may be a configuration management functional entity, a functional module that can be configured in the configuration management functional entity, or the like. The transceiver module 902 is configured to perform receiving and sending related operations of the second network element in the foregoing method embodiments. The processing module 901 is configured to perform a processing related operation of the second network element in the foregoing method embodiments.

For example, the transceiver module 902 is configured to input or receive green energy management indication information; and the processing module 901 is configured to control green energy usage of a communication network element in a first time period based on the green energy management indication information.

For example, the transceiver module 902 is further configured to: send (or output) a control request, and receive (or input) a control response.

For example, the transceiver module 902 is further configured to send (or output) feedback information.

FIG. 9 is reused. In still some other embodiments of this application, the network element may be configured to perform actions performed by the third network element in the foregoing method embodiments. In this case, the network element may be a performance management functional entity, a functional module that can be configured in the performance management functional entity, or the like. The transceiver module 902 is configured to perform receiving and sending related operations of the third network element in the foregoing method embodiments. The processing module 901 is configured to perform a processing related operation of the third network element in the foregoing method embodiments.

For example, the transceiver module 902 is configured to: receive (or input) a first measurement request, and send (or output) a first measurement response.

For example, the transceiver module 902 is further configured to: send (or output) a second measurement request, and receive (or input) a second measurement response.

FIG. 9 is reused. In still some other embodiments of this application, the network element may be configured to perform actions performed by the fourth network element in the foregoing method embodiments. In this case, the network element may be an energy management system or the like. The transceiver module 902 is configured to perform receiving and sending related operations of the fourth network element in the foregoing method embodiments. The processing module 901 is configured to perform a processing related operation of the fourth network element in the foregoing method embodiments.

For example, the transceiver module 902 is configured to: receive (or input) a control request, and send (or output) a control response.

For example, the transceiver module 902 is further configured to: receive (or input) a second measurement request, and send (or output) a second measurement response.

Optionally, in the foregoing embodiments, the network element may further include a storage module. The storage module may be configured to store instructions and/or data. The processing module 901 may read the instructions and/or the data in the storage module, to enable the network element to implement the foregoing method embodiments.

In the foregoing embodiments, for specific descriptions of steps or terms such as the green energy indicator, the green energy management indication information, the green energy decision factor, the measurement value of the green energy indicator, and the mapping relationship, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the network element in embodiments of this application, and the following describes a possible product form of the network element. Any form of product that has a function of the network element in FIG. 9 falls within the protection scope of embodiments of this application. The following descriptions are merely an example, and a product form of the network element in embodiments of this application is not limited thereto.

In a possible implementation, in the network element shown in FIG. 9, the processing module 901 may be one or more processors, and the transceiver module 902 may be a transceiver. Alternatively, the transceiver module 902 may be a sending module and a receiving module. The sending module may be a transmitter, the receiving module may be a receiver, and the sending module and the receiving module are integrated into one device, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before the information is input into the processor.

As shown in FIG. 10, a network element 100 includes one or more processors 1020 and a transceiver 1010.

In some embodiments of this application, when the network element is configured to perform the steps, the method, or the functions performed by the first network element, the processor 1020 is configured to: obtain a green energy decision factor, and send or output green energy management indication information based on the green energy decision factor. For example, the transceiver 1010 is further configured to: send a first measurement request, and receive a first measurement response. For example, the transceiver 1010 is further configured to receive feedback information of the green energy management indication information.

In some other embodiments of this application, when the network element is configured to perform the steps, the method, or the functions performed by the second network element, the transceiver 1010 is configured to receive green energy management indication information; and the processor 1020 is configured to control green energy usage of a communication network element in a first time period based on the green energy management indication information. For example, the transceiver 1010 is further configured to: send a control request, and receive a control response. For example, the transceiver 1010 is further configured to send feedback information.

In still some other embodiments of this application, when the network element is configured to perform the steps, the method, or the functions performed by the third network element, the transceiver 1010 is configured to: receive a first measurement request, and send a first measurement response. For example, the transceiver 1010 is further configured to: send a second measurement request, and receive a second measurement response.

In still some other embodiments of this application, when the network element is configured to perform the steps, the method, or the functions performed by the fourth network element, the transceiver 1010 is configured to: receive a control request, and send a control response. For example, the transceiver 1010 is further configured to: receive a second measurement request, and send a second measurement response.

In the foregoing embodiments, for specific descriptions of steps or terms such as the green energy indicator, the green energy management indication information, the green energy decision factor, the measurement value of the green energy indicator, and the mapping relationship, refer to the descriptions in the foregoing method embodiments. Details are not described herein again.

In the implementations of the network element shown in FIG. 10, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the network element 100 may further include one or more memories 1030, configured to store program instructions and/or data. The memory 1030 is coupled to the processor 1020. The coupling in embodiments of this application is indirect coupling or a communication connection between apparatuses, units, or modules in an electrical form, a mechanical form, or another form, and is for information exchange between the apparatuses, the units, or the modules. The processor 1020 may operate in collaboration with the memory 1030. The processor 1020 may execute the program instructions stored in the memory 1030. Optionally, at least one of the one or more memories may be included in the processor.

A specific connection medium between the transceiver 1010, the processor 1020, and the memory 1030 is not limited in embodiments of this application. In embodiments of this application, the memory 1030, the processor 1020, and the transceiver 1010 are connected through a bus 1040 in FIG. 10. The bus is represented by using a bold line in FIG. 10. A connection manner of other components is merely an example for description and is not limited thereto. The bus may be classified into an address bus, a data bus, a control bus, and the like. For ease of representation, only one bold line is used for representation in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed with reference to embodiments of this application may be directly implemented by a hardware processor, or may be implemented by a combination of hardware in the processor and a software module, or the like.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is any storage medium that can be used to carry or store program code in a form of an instruction or a data structure and that can be read and/or written by a computer (for example, the network element shown in this application). However, this is not limited. The memory in embodiments of this application may alternatively be a circuit or any other apparatus that can implement a storage function, and is configured to store the program instructions and/or the data.

The processor 1020 is mainly configured to process a communication protocol and communication data, control the entire network element, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, for example, a touchscreen, a display, or a keyboard, is mainly configured to receive data input by a user and output data to the user.

After the network element is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the network element, the radio frequency circuit receives a radio frequency signal through the antenna, converts the radio frequency signal into a baseband signal, and outputs the baseband signal to the processor 1020. The processor 1020 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the network element.

The network element shown in embodiments of this application may further have more components than those in FIG. 10, and the like. This is not limited in embodiments of this application. The methods performed by the processor and the transceiver are merely examples. For specific steps performed by the processor and the transceiver, refer to the methods described above.

In another possible implementation, in the network element shown in FIG. 9, the processing module 901 may be one or more logic circuits, and the transceiver module 902 may be an input/output interface, or may be referred to as a communication interface, an interface circuit, an interface, or the like. Alternatively, the transceiver module 902 may be a sending module and a receiving module. The sending module may be an output interface, and the receiving module may be an input interface. The sending module and the receiving module are integrated into one module, for example, an input/output interface. As shown in FIG. 11, a network element shown in FIG. 11 includes a logic circuit 1101 and an interface 1102. To be specific, the processing module 901 may be implemented by using the logic circuit 1101, and the transceiver module 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is shown by using an example in which the foregoing network element is a chip, and the chip includes the logic circuit 1101 and the interface 1102.

In embodiments of this application, the logic circuit and the interface may be coupled to each other. A specific connection manner of the logic circuit and the interface is not limited in embodiments of this application.

In some embodiments of this application, when the network element is configured to perform the steps, the method, or the functions performed by the first network element, the logic circuit 1101 is configured to: obtain a green energy decision factor, and send or output green energy management indication information based on the green energy decision factor. For example, the interface 1102 is further configured to: output a first measurement request, and input a first measurement response. For example, the interface 1102 is further configured to input feedback information of the green energy management indication information.

In some other embodiments of this application, when the network element is configured to perform the steps, the method, or the functions performed by the second network element, the interface 1102 is configured to input green energy management indication information; and the logic circuit 1101 is configured to control green energy usage of a communication network element in a first time period based on the green energy management indication information. For example, the interface 1102 is further configured to: output a control request, and input a control response. For example, the interface 1102 is further configured to output feedback information.

In still some other embodiments of this application, when the network element is configured to perform the steps, the method, or the functions performed by the third network element, for example, the interface 1102 is configured to: input a first measurement request, and output a first measurement response. For example, the interface 1102 is further configured to: output a second measurement request, and input a second measurement response.

In still some other embodiments of this application, when the network element is configured to perform the steps, the method, or the functions performed by the fourth network element, for example, the interface 1102 is configured to: input a control request, and output a control response. For example, the interface 1102 is further configured to: input a second measurement request, and output a second measurement response.

The network element shown in this embodiment of this application may implement, in a form of hardware, the method provided in embodiments of this application, or may implement, in a form of software, the method provided in embodiments of this application. This is not limited in embodiments of this application.

In the foregoing embodiments, for specific descriptions of steps or terms such as the green energy indicator, the green energy management indication information, the green energy decision factor, the measurement value of the green energy indicator, and the mapping relationship, refer to the descriptions in the foregoing method embodiments. Details are not described herein again. For specific implementations of embodiments shown in FIG. 11, further refer to the foregoing embodiments. Details are not described herein again.

An embodiment of this application further provides a green energy management system. The green energy management system includes a first network element and a second network element. The first network element and the second network element may be configured to perform the method in any one of the foregoing embodiments. For example, the system may further include a third network element and a fourth network element. The third network element and the fourth network element may be configured to perform the method in any one of the foregoing embodiments.

In addition, this application further provides a computer program. The computer program is used to implement operations and/or processing performed by network elements in the method provided in this application.

This application further provides a computer-readable storage medium. The computer-readable storage medium stores computer code. When the computer code is run on a computer, the computer is enabled to perform operations and/or processing performed by network elements in the method provided in this application.

This application further provides a computer program product. The computer program product includes computer code or a computer program. When the computer code or the computer program is run on a computer, operations and/or processing performed by network elements in the method provided in this application are/is performed.

In the several embodiments provided in this application, it should be understood that the disclosed system, apparatus, and method may be implemented in other manners. For example, the described apparatus embodiments are merely examples. For example, module division is merely logical function division. In actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, each of the modules may exist alone physically, or two or more modules may be integrated into one module. The integrated module may be implemented in a form of hardware, or may be implemented in a form of a software functional module.

When the integrated module is implemented in the form of the software functional module and sold or used as an independent product, the integrated module may be stored in a computer-readable storage medium. Based on such an understanding, the technical solutions of this application essentially, or the part contributing to a conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A green energy management method, wherein the method comprises:

   obtaining a green energy decision factor, wherein the green energy decision factor is a factor used to decide a green energy usage status of a communication network element; and
   sending green energy management indication information based on the green energy decision factor, wherein the green energy management indication information is used to control green energy usage of the communication network element in a first time period.

2. The method according to claim 1, wherein the green energy decision factor comprises a measurement value of and a requirement on a green energy indicator of the communication network element.

3. The method according to claim 2, wherein sending the green energy management indication information based on the green energy decision factor comprises:
   when the measurement value does not satisfy the requirement, sending the green energy management indication information based on a difference between the measurement value and the requirement.

4. The method according to claim 2 or 3, wherein the green energy indicator comprises at least one of the following:

   a green energy proportion, wherein the green energy proportion indicates a proportion of green energy consumption of the communication network element in overall energy consumption of the communication network element;
   green energy usage, wherein the green energy usage indicates green energy consumption of the communication network element in a second time period;
   a green energy supply, wherein the green energy supply indicates an amount of green energy provided for the communication network element in a second time period;
   carbon emission, wherein the carbon emission indicates carbon emission generated by the communication network element due to power consumption in a second time period;
   carbon intensity, wherein the carbon intensity indicates carbon emission generated by the communication network element for a unit data volume of the communication network element; or
   carbon efficiency, wherein the carbon efficiency indicates carbon emission generated by the communication network element for a unit service level, or a unit service level brought by unit carbon emission.

5. The method according to any one of claims 1 to 4, wherein the green energy decision factor comprises a mapping relationship between a unit price of non-green energy and a time period.

6. The method according to claim 5, wherein

   if the mapping relationship indicates that a unit price of the non-green energy in the first time period is higher than a unit price of the non-green energy in a third time period, the green energy management indication information indicates that the green energy usage in the first time period is greater than zero; or
   if the mapping relationship indicates that a unit price of the non-green energy in the first time period is lower than or equal to a unit price of the non-green energy in a third time period, the green energy management indication information indicates that the green energy usage in the first time period is zero.

7. The method according to any one of claims 1 to 6, wherein the green energy management indication information comprises at least one of the following:

   an increase amount or a decrease amount of the green energy usage in the first time period;
   the green energy usage in the first time period; or
   indication information indicating to increase the green energy usage in the first time period, or indication information indicating to decrease the green energy usage in the first time period.

8. The method according to any one of claims 1 to 7, wherein the green energy management indication information comprises identification information of the communication network element.

9. The method according to claim 2, wherein obtaining the green energy decision factor of the communication network element comprises:

sending a first measurement request, wherein the first measurement request is used to request to measure the green energy indicator of the communication network element; and

receiving a first measurement response of the first measurement request, wherein the first measurement response comprises the measurement value of the green energy indicator.

10. The method according to claim 9, wherein the first measurement request comprises identification information of the communication network element and first indicator indication information, and the first indicator indication information indicates the green energy indicator.

11. The method according to claim 10, wherein the first measurement request further comprises time period indication information, the time period indication information indicates a second time period, and the measurement value of the green energy indicator is a measurement value of a green energy indicator in the second time period.

12. The method according to any one of claims 1 to 11, wherein the method further comprises:
receiving feedback information of the green energy management indication information, wherein the feedback information indicates a control result of the green energy usage of the communication network element in the first time period.

13. A green energy management method, wherein the method comprises:

receiving green energy management indication information, wherein the green energy management indication information is used to control green energy usage of a communication network element in a first time period; and controlling the green energy usage of the communication network element in the first time period based on the green energy management indication information.

14. The method according to claim 13, wherein the green energy management indication information comprises at least one of the following:

an increase amount or a decrease amount of the green energy usage in the first time period;
the green energy usage in the first time period; or
indication information indicating to increase the green energy usage in the first time period, or indication information indicating to decrease the green energy usage in the first time period.

15. The method according to claim 13 or 14, wherein the green energy management indication information comprises identification information of the communication network element.

16. The method according to any one of claims 13 to 15, wherein controlling the green energy usage of the communication network element based on the green energy management indication information comprises:

sending a control request, wherein the control request is used to request to control the green energy usage of the communication network element; and
receiving a control response of the control request, wherein the control response indicates a control result of the green energy usage of the communication network element in the first time period.

17. The method according to claim 16, wherein the control request comprises at least one of the following:

the increase amount or the decrease amount of the green energy usage in the first time period;
the green energy usage in the first time period; or
the indication information indicating to increase the green energy usage in the first time period, or the indication information indicating to decrease the green energy usage in the first time period.

18. The method according to claim 16 or 17, wherein the control request comprises location information of the communication network element, or identification information of a power supply system corresponding to the communication network element.

19. The method according to claim 18, wherein before sending the control request, the method further comprises:

obtaining, based on the location information corresponding to the identification information of the communication network element, the identification information of the power supply system corresponding to the communication network element; and

storing a correspondence between the identification information of the communication network element and the identification information of the power supply system.

20. The method according to any one of claims 16 to 19, wherein the method further comprises:
sending feedback information based on the control response, wherein the feedback information indicates the control result of the green energy usage of the communication network element in the first time period.

21. A green energy management method, wherein the method comprises:

receiving a control request, wherein the control request is used to request to control green energy usage of a communication network element; and

sending a control response of the control request, wherein the control response indicates an adjustment result of green energy usage of the communication network element in a first time period.

22. The method according to claim 21, wherein the control request comprises at least one of the following:

an increase amount or a decrease amount of the green energy usage in the first time period;

the green energy usage in the first time period; or

indication information indicating to increase the green energy usage in the first time period, or indication information indicating to decrease the green energy usage in the first time period.

23. The method according to claim 21 or 22, wherein the control request comprises location information of the communication network element, or identification information of a power supply system corresponding to the communication network element.

24. The method according to any one of claims 21 to 23, wherein before receiving the control request, the method further comprises:

receiving a second measurement request, wherein the second measurement request is used to request to measure a green energy indicator of the communication network element; and

sending a second measurement response of the second measurement request, wherein the second measurement response comprises a measurement value of the green energy indicator.

25. The method according to claim 24, wherein the second measurement request comprises second indicator indication information, the measurement request further comprises the location information of the communication network element, or the identification information of the power supply system corresponding to the communication network element, and the second indicator indication information indicates the green energy indicator.

26. The method according to claim 25, wherein the second measurement request further comprises time period indication information, the time period indication information indicates a second time period, and the measurement value of the green energy indicator is a measurement value of a green energy indicator in the second time period.

27. A green energy management method, wherein the method comprises:

receiving a first measurement request, wherein the first measurement request is used to request to measure a green energy indicator of a communication network element; and

sending a first measurement response of the first measurement request, wherein the first measurement response comprises a measurement value of the green energy indicator.

28. The method according to claim 27, wherein the first measurement request comprises identification information of the communication network element and first indicator indication information, and the first indicator indication information indicates the green energy indicator.

29. The method according to claim 28, wherein the first measurement request further comprises time period indication information, the time period indication information indicates a second time period, and the measurement value of the green energy indicator is a measurement value of a green energy indicator in the second time period.

30. The method according to any one of claims 27 to 29, wherein after receiving the first measurement request, and before sending the first measurement response of the first measurement request, the method further comprises:

sending a second measurement request, wherein the second measurement request comprises second indicator indication information, the second measurement request further comprises location information of the communication network element, or identification information of a power supply system corresponding to the communication network element, and the second indicator indication information indicates the green energy indicator; and

receiving a second measurement response of the second measurement request, wherein the second measurement response comprises the measurement value of the green energy indicator.

31. The method according to claim 30, wherein before sending the second measurement request, the method further comprises:
obtaining, based on the location information corresponding to the identification information of the communication network element, the identification information of the power supply system corresponding to the communication network element.

32. A green energy management method, wherein the method comprises:

obtaining, by a first network element, a green energy decision factor, wherein the green energy decision factor is a factor used to decide a green energy usage status of a communication network element;

sending, by the first network element, green energy management indication information based on the green energy decision factor, wherein the green energy management indication information is used to control green energy usage of the communication network element in a first time period; and

receiving, by a second network element, the green energy management indication information, and controlling the green energy usage of the communication network element based on the green energy management indication information.

33. A network element, comprising a module configured to perform the method according to any one of claims 1 to 31.

34. A network element, comprising a processor, wherein the processor is configured to perform the method according to any one of claims 1 to 31.

35. A network element, comprising a logic circuit and an interface, wherein the logic circuit is coupled to the interface; and the interface is configured to input and/or output code instructions, and the logic circuit is configured to execute the code instructions, to enable the method according to any one of claims 1 to 31 to be performed.

36. A computer-readable storage medium, wherein the computer-readable storage medium is configured to store a computer program, and when the computer program is executed, the method according to any one of claims 1 to 31 is performed.

37. A green energy management system, wherein the green energy management system comprises a first network element and a second network element, the first network element is configured to perform the method according to any one of claims 1 to 12, and the second network element is configured to perform the method according to any one of claims 13 to 20.

38. The green energy management system according to claim 37, wherein the green energy management system further comprises a third network element and a fourth network element, the third network element is configured to perform the method according to any one of claims 21 to 26, and the fourth network element is configured to perform the method according to any one of claims 27 to 31.

Energy management
system

1: Solar power
supply

Solar photovoltaic
panel

↓

Junction
box

↓

Photovoltaic
circuit
breaker

→

Solar
module

2: Mains electricity
power supply

Mains
electricity

↓

Alternating
current
distribution

→

Rectifier
module

3: Battery
power supply

Battery

Power-consuming device
(for example, a base
station)

FIG. 1

Green energy
management
functional entity

NMS

Performance
management
functional entity

Configuration
management
functional entity

EMS in a CN/RAN domain

Network device

CN/RAN

Network side

Energy
management
system

Battery

Mains
electricity

Solar energy

Energy side

FIG. 2

Configuration management
functional entity

Green energy management
functional entity

301: Obtain a green energy decision
factor

302: Send green energy management
indication information based on the green
energy decision factor

303: Control green energy usage of a
communication network element based
on the green energy management
indication information

304: Feedback information

FIG. 3

| Configuration management functional entity | Performance management functional entity | Green energy management functional entity |
|---|---|---|

4011: First measurement request, where the first measurement request is used to request to measure a green energy indicator of a communication network element

4012: First measurement response, where the first measurement response includes a measurement value of the green energy indicator

402: Send green energy management indication information based on a difference between the measurement value and a requirement

403: Control green energy usage of the communication network element based on the green energy management indication information

FIG. 4a

| Configuration management functional entity | Green energy management functional entity |
|---|---|

411: Obtain a mapping relationship between a unit price of non-green energy and a time period

412: Send green energy management indication information based on the mapping relationship

413: Control green energy usage of a communication network element based on the green energy management indication information

FIG. 4b

```
┌─────────────────────┐                              ┌─────────────────────────┐
│ Energy management   │                              │ Configuration management│
│      system         │                              │   functional entity     │
└─────────────────────┘                              └─────────────────────────┘
          │                                                        │
          │                          ┌ ─ ─ ─ ─ ─ ─ ─ ─ ─ ─ ─ ─ ─ ─ ─ ─ ─ ─ ─ ┐
          │                            501: Determine, based on green energy
          │                          │ management indication information, to  │
          │                            deliver a control request to the energy
          │                          │        management system               │
          │                          └ ─ ─ ─ ─ ─ ─ ─ ─ ─ ─ ─ ─ ─ ─ ─ ─ ─ ─ ─ ┘
          │   502: Control request, including, for example, location          │
          │   information of a communication network element and              │
          │          green energy usage in a first time period                │
          │ ◄─────────────────────────────────────────────────────────────── │
          │                                                                    │
          │                    503: Control response                          │
          │ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ►│
          │                                                                    │
          │                                                                    │
```

## FIG. 5

| Energy management system | Configuration management functional entity | Performance management functional entity | Green energy management functional entity |
|---|---|---|---|

601: First measurement request, including identification information of a communication network element, first indicator indication information, and time period indication information

602: Determine location information of the communication network element based on the identification information of the communication network element, and determine second indicator indication information based on the first indicator indication information

603: Second measurement request, including the location information of the communication network element, the second indicator indication information, and the time period indication information

604: Determine a power supply system at a same location based on the location information of the communication network element, and collect a measurement value of a green energy indicator of the communication network element in a second time period

605: Second measurement response, including a measurement value of the second indicator indication information, the location information of the communication network element, and the time period indication information

TO FIG. 6B                    TO FIG. 6B

FIG. 6A

CONT. FROM FIG. 6A    CONT. FROM FIG. 6A

606: Determine the measurement value of the green energy indicator based on the measurement value of the second indicator indication information

607: First measurement response, including the measurement value of the green energy indicator and the identification information of the communication network element

608: Determine green energy management indication information based on the measurement value of and a requirement on the green energy indicator

609: Green energy management indication information, including, for example, the identification information of the communication network element and green energy usage in a first time period

610: Determine, based on the green energy management indication information, to deliver a control request to the energy management system

611: Control request, including, for example, the location information of the communication network element and the green energy usage in the first time period

612: Control response

613: Feedback information

FIG. 6B

| Energy management system | Configuration management functional entity | Performance management functional entity | Green energy management functional entity |
|---|---|---|---|

701: Maintain a relationship between identification information and location information of a communication network element

702: Request to obtain identification information of a power supply system corresponding to the communication network element

703: Determine, based on the location information of the communication network element, the identification information of the power supply system corresponding to the communication network element

704: Return the identification information of the power supply system corresponding to the communication network element

705: Store a correspondence between the communication network element and the power supply system

706: First measurement request, including the identification information of the communication network element, first indicator indication information, and time period indication information

TO FIG. 7B                    TO FIG. 7B

FIG. 7A

CONT. FROM FIG. 7A                    CONT. FROM FIG. 7A

707: Obtain the identification information of the corresponding power supply system from a configuration management function based on the identification information of the communication network element, and determine second indicator indication information based on the first indicator indication information

708: Request to obtain the identification information of the power supply system

709: Return the identification information of the power supply system

710: Second measurement request, including the identification information of the power supply system, the second indicator indication information, and the time period indication information

711: Second measurement response, including a measurement value of the second indicator indication information, the identification information of the power supply system, and the time period indication information

712: Determine a measurement value of a green energy indicator based on the measurement value of the second indicator indication information

TO FIG. 7C                            TO FIG. 7C

FIG. 7B

CONT. FROM FIG. 7B          CONT. FROM FIG. 7B

713: First measurement
response, including the
measurement value of
the green energy
indicator and the
identification
information of the
communication network
element

714: Determine green energy
management indication information
based on the measurement value of
and a requirement on the green
energy indicator

715: Green energy management indication
information, including, for example, the
identification information of the
communication network element and green
energy usage in a first time period

716: Determine, based on the
green energy management
indication information, to deliver
a control request to the energy
management system

717: Control request,
including, for
example, the location
information of the
communication
network element and
the green energy
usage in the first time
period

718: Control
response

719: Feedback
information

FIG. 7C

| Energy management system | Configuration management functional entity | Performance management functional entity | Green energy management functional entity |
|---|---|---|---|

801: Maintain a relationship between identification information and location information of a communication network element

802: Request to obtain identification information of a power supply system corresponding to the communication network element

803: Determine, based on the location information of the communication network element, the identification information of the power supply system corresponding to the communication network element

804: Return the identification information of the power supply system corresponding to the communication network element

805: Correspondence between the communication network element and the power supply system

806: First measurement request, including the identification information of the communication network element, first indicator indication information, and time period indication information

807: Determine the identification information of the power supply system based on the correspondence, and determine second indicator indication information based on the first indicator indication information

808: Second measurement request, including the identification information of the power supply system, the second indicator indication information, and the time period indication information

TO FIG. 8B                              TO FIG. 8B

FIG. 8A

809: Second measurement response, including a measurement value of the second indicator indication information, the identification information of the power supply system, and the time period indication information

810: Determine a measurement value of a green energy indicator based on the measurement value of the second indicator indication information

811: First measurement response, including the measurement value of the green energy indicator and the identification information of the communication network element

812: Determine green energy management indication information based on the measurement value of and a requirement on the green energy indicator

813: Green energy management indication information, including, for example, the identification information of the communication network element and green energy usage in a first time period

814: Determine, based on the green energy management indication information, to deliver a control request to the energy management system

815: Control request, including, for example, the location information of the communication network element and the green energy usage in the first time period

816: Control response

817: Feedback information

FIG. 8B

Processing module — 901

Transceiver module — 902

Network element

FIG. 9

100

Transceiver — 1010

Processor — 1020

— 1040

— 1030

Memory

FIG. 10

Chip

Logic circuit — 1101

Interface — 1102

FIG. 11

## INTERNATIONAL SEARCH REPORT

| International application No. |
| --- |
| **PCT/CN2024/104763** |

**A.  CLASSIFICATION OF SUBJECT MATTER**

H04W24/02(2009.01)i

According to International Patent Classification (IPC) or to both national classification and IPC

**B.  FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; ENTXTC; VEN; IEEE: 绿能, 绿色能源, 可再生能源, 管理, 决策, 使用情况, 使用量, 指示, 控制, 请求, 响应, 测量, 指标, green energy, manage, use, indicate, control, request, response, measurement

**C.  DOCUMENTS CONSIDERED TO BE RELEVANT**

| Category* | Citation of document, with indication, where appropriate, of the relevant passages | Relevant to claim No. |
| --- | --- | --- |
| X | US 2022224121 A1 (JHA, Satish Chandra et al.) 14 July 2022 (2022-07-14) description, paragraphs [0034], [0044], [0110], and [0138]-[0146] | 1-38 |
| A | WO 2023057071 A1 (TELEFONAKTIEBOLAGET LM ERICSSON (PUBL)) 13 April 2023 (2023-04-13) entire document | 1-38 |
| A | CN 116193527 A (HUAWEI TECHNOLOGIES CO., LTD.) 30 May 2023 (2023-05-30) entire document | 1-38 |
| A | US 2012253711 A1 (SONY CORP.) 04 October 2012 (2012-10-04) entire document | 1-38 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 September 2024** | **23 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/104763**

| Patent document cited in search report | | | Publication date (day/month/year) | Patent family member(s) | | | Publication date (day/month/year) |
|---|---|---|---|---|---|---|---|
| US | 2022224121 | A1 | 14 July 2022 | None | | | |
| WO | 2023057071 | A1 | 13 April 2023 | EP | 4413765 | A1 | 14 August 2024 |
| | | | | CN | 118176767 | A | 11 June 2024 |
| CN | 116193527 | A | 30 May 2023 | None | | | |
| US | 2012253711 | A1 | 04 October 2012 | JP | 2012212347 | A | 01 November 2012 |
| | | | | EP | 2506205 | A1 | 03 October 2012 |
| | | | | CN | 102737349 | A | 17 October 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311015416